(19) **Europäisches Patentamt / European Patent Office / Office européen des brevets**

(11) **EP 4 686 272 A1**

(12) **EUROPEAN PATENT APPLICATION**
published in accordance with Art. 153(4) EPC

(43) Date of publication:
28.01.2026 Bulletin 2026/05

(21) Application number: 24784026.7

(22) Date of filing: 12.03.2024

(51) International Patent Classification (IPC):
*H04W 52/18* (2009.01)

(52) Cooperative Patent Classification (CPC):
H04W 52/14; H04W 52/18; H04W 52/24;
H04W 52/32; H04W 64/00

(86) International application number:
PCT/CN2024/081118

(87) International publication number:
WO 2024/207941 (10.10.2024 Gazette 2024/41)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 07.04.2023 CN 202310405814

(71) Applicant: Huawei Technologies Co., Ltd.
Shenzhen, Guangdong 518129 (CN)

(72) Inventor: YU, Yingjie
Shenzhen, Guangdong 518129 (CN)

(74) Representative: Gill Jennings & Every LLP
The Broadgate Tower
20 Primrose Street
London EC2A 2ES (GB)

(54) **COMMUNICATION METHOD AND APPARATUS, AND STORAGE MEDIUM AND CHIP SYSTEM**

(57)   A communication method and apparatus, a storage medium, and a chip system are provided, to provide a power control manner of a reference signal. In this application, a first terminal apparatus obtains a first parameter, where the first parameter includes at least a comb value of the reference signal. The first terminal apparatus determines a first power value, and determines a second power value based on the first parameter and the first power value; or the first terminal apparatus determines a second power value, and determines a first power value based on the first parameter and the second power value. The first terminal apparatus sends the reference signal based on the first power value, and sends a PSCCH based on the second power value. Because the first power value or the second power value is determined based on the comb value of the reference signal, an average power value of the reference signal on one RE is close to or equal to an average power value of the PSCCH on one RE, so that another terminal device can select a more proper resource based on an RSRP of the PSCCH.

501: A first terminal apparatus obtains a first parameter

502: The first terminal apparatus determines a first power value, and determines a second power value based on the first parameter and the first power value; or the first terminal apparatus determines a second power value, and determines a first power value based on the first parameter and the second power value

503: The first terminal apparatus sends a reference signal based on the first power value, and sends a PSCCH based on the second power value

FIG. 5

**Description**

CROSS-REFERENCE TO RELATED APPLICATIONS

This application claims priority to Chinese Patent Application No. 202310405814.2, filed with the China National Intellectual Property Administration on April 7, 2023 and entitled "COMMUNICATION METHOD AND APPARATUS, STORAGE MEDIUM, AND CHIP SYSTEM", which is incorporated herein by reference in its entirety.

TECHNICAL FIELD

This application relates to the field of communication technologies, and in particular, to a communication method and apparatus, a storage medium, and a chip system.

BACKGROUND

With rapid development of communication technologies, high-precision positioning is gradually determined as an important research project in a 5th generation mobile communication system (5th Generation Mobile Networks or 5th Generation Wireless Systems, 5G) of the 3rd generation partnership project (3rd Generation Partnership Project, 3GPP). Scenarios of new radio (New Radio, NR) positioning mainly include: enhanced mobile broadband (enhanced Mobile Broadband, eMBB) outdoor, eMBB indoor, ultra-reliable and low-latency communications (Ultra-Reliable and Low-Latency Communications, URLLC), and massive machine-type communication (massive Machine Type of Communication, mMTC)/internet of things (Internet of Things, IoT). The NR positioning also requires characteristics such as high security, scalability, high availability, and precision assurance in high-speed applications.

Current positioning technologies mainly include uplink positioning, downlink positioning, and uplink and downlink positioning. In an uplink positioning process, a network device (for example, a base station) measures a reference signal sent by a terminal device. In a downlink positioning process, the terminal device measures a positioning reference signal sent by the network device. In uplink and downlink positioning, both the terminal device and the network device need to measure a received signal. With development of technologies such as a vehicle to everything technology and an autonomous driving technology, research based on sidelink positioning in the future gradually attracts attention from the academic and industrial circles.

In addition, transmit power control on a signal in a wireless communication system is extremely important. For example, through power control on an uplink signal, the terminal device can not only ensure quality of uplink data, but also reduce interference to a system and another user as much as possible, thereby prolonging use time of a battery of the terminal device. Through the power control on the uplink signal, the base station can enable uplink transmission to adapt to different wireless transmission environments, including a path loss, a shadow, fast fading, interference from other terminal devices in a cell and between cells, and the like. However, in a scenario based on the sidelink positioning, currently, there is no power control mechanism.

SUMMARY

This application provides a communication method and apparatus, a storage medium, and a chip system, to provide a power control manner of a reference signal.

A terminal device may select a resource in a sensing manner. In this manner, the terminal device may measure a reference signal received power (reference signal received power, RSRP) of a physical sidelink control channel (Physical sidelink control channel, PSCCH) whose transmission is performed on the resource. When the RSRP is less than a threshold, the terminal device considers that there is no strong interference when transmission of information is performed on the resource, and considers that the resource is an available resource.

However, transmission of some reference signals (for example, a sidelink positioning reference signal) may also be performed on the resource. However, currently, no power control solution for these reference signals is defined. If the terminal device performs resource selection based on the RSRP of the PSCCH, it is possible that an RSRP of a PSCCH on a selected resource is less than the threshold, but an RSRP of a reference signal on the resource is large. If the terminal device performs transmission of the information on the resource, there is strong interference.

This application provides a solution for determining a power value of a reference signal and a power value of a PSCCH. In the solution, the power value of the reference signal or the power value of the PSCCH is associated with a comb value of the reference signal, so that an average power value of the reference signal on one RE is associated with an average power value of the PSCCH on one RE, there is an association relationship between an RSRP of the PSCCH and an RSRP of the reference signal, and the RSRP of the PSCCH can reflect the RSRP of the reference signal to some extent. When another terminal device performs resource selection, because an RSRP of the PSCCH measured by the another terminal device may reflect the RSRP of the PSCCH and the RSRP of the reference signal, the another terminal device may select a more proper resource based on the RSRP of the PSCCH.

**According to a first aspect,** this application provides a first communication method. The method may be performed by a first terminal apparatus. The first terminal apparatus may be a terminal device or a module, a unit, or a chip (system) in the terminal device. The method includes the following.

The first terminal apparatus obtains a first parameter. The first parameter includes a comb value of a reference signal. The first terminal apparatus determines a first power value, and determines a second power value based on the first parameter and the first power value; or the first terminal apparatus determines a second power value, and determines a first power value based on the first parameter and the second power value. The first terminal apparatus sends the reference signal based on the first power value, and sends a PSCCH based on the second power value.

Because the first terminal apparatus determines the second power value based on the comb value of the reference signal and the first power value, or the first terminal apparatus determines the first power value based on the comb value of the reference signal and the second power value, an average power value of the reference signal on one RE is close to or equal to an average power value of the PSCCH on one RE, so that an RSRP of the PSCCH is close to or equal to an RSRP of the reference signal, and the RSRP of the PSCCH can reflect the RSRP of the reference signal to some extent. When another terminal device performs resource selection, because an RSRP of the PSCCH measured by the another terminal device may reflect the RSRP of the PSCCH and the RSRP of the reference signal, the another terminal device may select a more proper resource based on the RSRP of the PSCCH.

In a possible implementation, the first parameter further includes at least one of a resource quantity of the reference signal or a resource quantity of the PSCCH.

In this way, the first power value or the second power value may be determined with reference to the comb value and the resource quantity of the reference signal or the resource quantity of the PSCCH. In this solution, a calculation process is simple, and the average power value of the reference signal on the one RE is close to or equal to the average power value of the PSCCH on the one RE, so that the another terminal device can select the more proper resource based on the RSRP of the PSCCH.

In a possible implementation, the first terminal apparatus determines the first power value, and the first terminal apparatus determines the second power value based on the first power value and a first value. The first value may include a quotient of a product of the resource quantity of the PSCCH and the comb value of the reference signal and the resource quantity of the reference signal. For example, the first value is the quotient of the product of the resource quantity of the PSCCH and the comb value of the reference signal and the resource quantity of the reference signal. Alternatively, the first value is a value associated with the quotient. For example, the first value is a result obtained by performing some mathematical operations on another parameter and the quotient.

The first value may alternatively be expressed in another formula. For example, the first value may alternatively include a difference between a sum of the resource quantity of the PSCCH and the comb value of the reference signal and the resource quantity of the reference signal. For example, the first value is the difference between the sum of the resource quantity of the PSCCH and the comb value of the reference signal and the resource quantity of the reference signal. Alternatively, the first value is a value associated with the difference. For example, the first value is a result obtained by performing some mathematical operations on another parameter and the difference.

A solution of determining the second power value based on the first value and the first power value is simple. In this way, a process of calculating the second power value can be simplified. In addition, a relationship between the first power value and the second power value is associated with the first value, so that the average power value of the reference signal on the one RE is close to or equal to the average power value of the PSCCH on the one RE, and the another terminal device can select the more proper resource based on the RSRP of the PSCCH.

In a possible implementation, the second power value is a sum or a product of the first power value and the first value. In this way, a ratio or a difference between the first power value and the second power value is equal to the first value, so that the average power value of the reference signal on the one RE is equal to the average power value of the PSCCH on the one RE, the RSRP of the PSCCH is close to or equal to the RSRP of the reference signal, and the another terminal device can select the more proper resource based on the RSRP of the PSCCH.

In a possible implementation, the following describes, according to the following formula, an example of a manner of calculating the power value of the PSCCH:

$$P_{PSCCH}(i) = P_{PRS}(i) + 10log_{10}(\frac{Comb * M_{RB}^{PSCCH}(i)}{M_{RB}^{PRS}(i)})[dBm]$$

In the formula, $P_{PSCCH}(i)$ represents a transmit power of the PSCCH on a sending occasion i, $P_{PRS}(i)$ represents a transmit power of the reference signal on the sending occasion i, Comb represents the comb value of the reference signal, $M_{RB}^{PSCCH}(i)$ represents a resource quantity (for example, a quantity of RBs of the PSCCH) of the PSCCH on the sending occasion i, $M_{RB}^{PRS}(i)$ represents a resource quantity (for example, a quantity of RBs of the reference signal) of the reference signal on the sending occasion i, and *log* is a logarithm.

In this application, dBm in each formula represents a unit: decibel relative to one milliwatt (decibel relative to one milliwatt, dBm).

In a possible implementation, when the first value is less than 1, the first terminal apparatus determines the first power value, and determines the second power value based on the first parameter and the first power value.

When the first value is less than 1, the first terminal apparatus first determines the first power value, and then determines the second power value based on the first parameter and the first power value. Therefore, the second power value can be reduced as much as possible, so that there can be a high probability that the second power value is less than a transmit power of the first terminal apparatus (and/or less than a transmit power of the first terminal apparatus based on a second CBR and a second transmission priority), and a more proper power value can be determined. The second transmission priority is a transmission priority of the PSCCH, a transmission priority of the reference signal, or a transmission priority of a physical sidelink shared control channel PSSCH.

In a possible implementation, when the second power value is greater than a second value, the first terminal apparatus uses the second value as an updated second power value, and sends the PSCCH based on the updated second power value; and the first terminal apparatus updates the first power value based on the updated second power value, and sends the reference signal based on an updated first power value. The second value is a smaller value in the transmit power of the first terminal apparatus and a transmit power of the first terminal apparatus based on a first CBR and a first transmission priority. The first transmission priority includes the transmission priority of the reference signal.

In this way, an excessively large second power value can be avoided. In addition, the relationship between the first power value and the second power value can be controlled, so that the average power value of the reference signal on the one RE is equal to the average power value of the PSCCH on the one RE, the RSRP of the PSCCH is close to or equal to the RSRP of the reference signal, and the another terminal device can select the more proper resource based on the RSRP of the PSCCH.

In a possible implementation, the first terminal apparatus determines the updated first power value based on the first parameter and the updated second power value.

In this way, the process of calculating the second power value can be simplified. In addition, the relationship between the first power value and the second power value is associated with the first value, so that the average power value of the reference signal on the one RE is close to or equal to the average power value of the PSCCH on the one RE, and the another terminal device can select the more proper resource based on the RSRP of the PSCCH.

In a possible implementation, the first terminal apparatus determines the first power value based on a third power value and/or a fourth power value. The third power value is determined based on the transmit power of the first terminal apparatus, the resource quantity of the reference signal, the resource quantity of the PSCCH, and the comb value of the reference signal. The fourth power value is determined based on the transmit power of the first terminal apparatus based on the first CBR and the first transmission priority, the resource quantity of the reference signal, the resource quantity of the PSCCH, and the comb value of the reference signal, and the first transmission priority includes the transmission priority of the reference signal.

In this way, because the first power value is determined based on the third power value and/or the fourth power value, an excessively large first power value can be avoided, and an excessively large second power value determined based on the first parameter and the first power value can also be avoided. It can be learned that a proper power value can be determined in this solution.

In a possible implementation, the third power value is a difference between or a quotient of the transmit power of the first terminal apparatus and the first value. The first value includes the quotient of the product of the resource quantity of the PSCCH and the comb value of the reference signal and the resource quantity of the reference signal. The first value may alternatively include the difference between the sum of the resource quantity of the PSCCH and the comb value of the reference signal and the resource quantity of the reference signal. In a possible implementation, the fourth power value is a difference between or a quotient of the transmit power of the first terminal apparatus based on the first CBR and the first transmission priority and the first value, and the first transmission priority includes the transmission priority of the reference signal.

Because the first power value is determined based on the third power value and/or the fourth power value, when the second power value may be subsequently determined based on the first power value and the first parameter, the excessively large second power value can be avoided, so that a proper second power value can be obtained.

In a possible implementation, the first power value is determined based on at least one of the following parameters: the transmit power of the first terminal apparatus; the transmit power of the first terminal apparatus based on the first CBR and the first transmission priority; a fifth power value; or a sixth power value. The first transmission priority includes the transmission priority of the reference signal.

The fifth power value is associated with at least one of a power control initial value of the reference signal based on a downlink path loss of the first terminal apparatus, the resource quantity of the reference signal, a downlink path loss adjustment coefficient, or a downlink path loss value. The sixth power value is associated with at least one of a power control initial value of the reference signal based on a sidelink path loss of the first terminal apparatus, the resource quantity of the reference signal, a sidelink path loss adjustment coefficient, or a sidelink path loss value.

In this way, the first power value may be determined with reference to a large quantity of factors, so that the first power value can be determined more properly.

In a possible implementation, the first terminal apparatus determines the second power value, and the first terminal apparatus determines the first power value based on the second power value and a third value. The third value may include a quotient of a quotient of the resource quantity of the reference signal and the comb value of the reference signal and the resource quantity of the PSCCH. For example, the third value is the quotient of the quotient of the resource quantity of the reference signal and the comb value of the reference signal and the resource quantity of the PSCCH. Alternatively, the third value is a value associated with the quotient (the quotient is the quotient of the quotient of the resource quantity of the reference signal and the comb value of the reference signal and the resource quantity of the PSCCH). For example, the first value is a result obtained by performing some mathematical operations on another parameter and the quotient.

The third value may alternatively include a difference between a difference between the resource quantity of the reference signal and the comb value of the reference signal and the resource quantity of the PSCCH. For example, the third value is the difference between the difference between the resource quantity of the reference signal and the comb value of the reference signal and the resource quantity of the PSCCH. Alternatively, the third value is a value associated with the difference (the difference is the difference between the difference between the resource quantity of the reference signal and the comb value of the reference signal and the resource quantity of the PSCCH). For example, the first value is a result obtained by performing some mathematical operations on another parameter and the difference.

A solution of determining the first power value based on the third value and the second power value is simple. In this way, a process of calculating the first power value can be simplified. In addition, a relationship between the first power value and the second power value is associated with the first value, so that the average power value of the reference signal on the one RE is close to or equal to the average power value of the PSCCH on the one RE, and the another terminal device can select the more proper resource based on the RSRP of the PSCCH.

In a possible implementation, the first power value is a sum or a product of the second power value and the third value. In this way, a ratio or a difference between the first power value and the second power value is equal to the first value, so that the average power value of the reference signal on the one RE is equal to the average power value of the PSCCH on the one RE, the RSRP of the PSCCH is close to or equal to the RSRP of the reference signal, and the another terminal device can select the more proper resource based on the RSRP of the PSCCH.

In a possible implementation, the following describes, according to the following formula, an example of a manner of calculating the power value of the reference signal:

$$P_{PRS}(i) = P_{PSCCH}(i) + 10log_{10}(\frac{M_{RB}^{PRS}(i)}{Comb * M_{RB}^{PSCCH}(i)})[dBm]$$

In the formula, $P_{PRS}(i)$ represents a transmit power of the reference signal on a sending occasion i, $P_{PSCCH}(i)$ represents a transmit power of the PSCCH on an SL BWP b of a carrier f on the sending occasion i, Comb represents the comb value of the reference signal, $M_{RB}^{PSCCH}(i)$ represents a resource quantity (for example, a quantity of RBs of the PSCCH) of the PSCCH on the sending occasion i, and $M_{RB}^{PRS}(i)$ represents a resource quantity (for example, a quantity of RBs of the reference signal) of the reference signal on the sending occasion i.

In a possible implementation, when the first value is greater than 1, the first terminal apparatus determines the second power value, and determines the first power value based on the first parameter and the second power value.

When the first value is greater than 1, the first terminal apparatus first determines the second power value, and then determines the first power value based on the first parameter and the second power value. Therefore, the first power value can be reduced as much as possible, so that there can be a high probability that the first power value is less than a transmit power of the first terminal apparatus (and/or less than a transmit power of the first terminal apparatus based on a first network congestion rate (channel busy ratio, CBR) and a first transmission priority), and a more proper power value can be determined.

In a possible implementation, when the first power value is greater than a fourth value, the first terminal apparatus uses the fourth value as an updated first power value, and sends the reference signal based on the updated first power value; and the first terminal apparatus updates the second power value based on the updated first power value, and sends the PSCCH based on an updated second power value. The fourth value is a smaller value in the transmit power of the first terminal apparatus and a transmit power of the first terminal apparatus based on a second CBR and a second transmission priority. The second transmission priority is a transmission priority of the PSCCH, a transmission priority of the reference signal, or a transmission priority of a physical sidelink shared control channel PSSCH.

In this way, an excessively large first power value can be avoided. In addition, the relationship between the first power value and the second power value can be controlled, so that the average power value of the reference signal on the one RE is equal to the average power value of the PSCCH on the one RE, the RSRP of the PSCCH is close to or equal to the RSRP of the reference signal, and the another terminal device can select the more proper resource based on the RSRP of the PSCCH.

In a possible implementation, the first terminal apparatus updates the second power value based on the first parameter and the updated first power value.

In this way, a process of calculating the second power value can be simplified. In addition, the relationship between the first power value and the second power value is associated with the first value, so that the average power value of the reference signal on the one RE is close to or equal to the average power value of the PSCCH on the one RE, and the another terminal device can select the more proper resource based on the RSRP of the PSCCH.

In a possible implementation, the first terminal apparatus determines the second power value based on a seventh power value and/or an eighth power value. The seventh power value is determined based on the transmit power of the first terminal apparatus, the resource quantity of the reference signal, the resource quantity of the PSCCH, and the comb value of the reference signal. The eighth power value is determined based on the transmit power of the first terminal apparatus based on the second CBR and the second transmission priority, the resource quantity of the reference signal, the resource quantity of the PSCCH, and the comb value of the reference signal.

In this way, because the second power value is determined based on the seventh power value and/or the eighth power value, an excessively large second power value can be avoided, and an excessively large first power value determined based on the first parameter and the second power value can also be avoided. It can be learned that a proper power value can be determined in this solution.

In a possible implementation, the seventh power value is a difference between or a quotient of the transmit power of the first terminal apparatus and the third value, and the third value includes the quotient of the quotient of the resource quantity of the reference signal and the comb value of the reference signal and the resource quantity of the PSCCH. The third value may alternatively include the difference between the difference between the resource quantity of the reference signal and the comb value of the reference signal and the resource quantity of the PSCCH. In a possible implementation, the eighth power value is a difference between or a quotient of the transmit power of the first terminal apparatus based on the second CBR and the second transmission priority and the third value.

Because the second power value is determined based on the seventh power value and/or the eighth power value, when the first power value may be subsequently determined based on the second power value and the first parameter, the excessively large first power value can be avoided, so that a proper first power value can be obtained.

In a possible implementation, the second power value is determined based on at least one of the following parameters: the transmit power of the first terminal apparatus; the transmit power of the first terminal apparatus based on the second CBR and the second transmission priority; a ninth power value; or a tenth power value. In a possible implementation, the ninth power value is associated with at least one of a power control initial value of the PSCCH based on a downlink path loss of the first terminal apparatus, the resource quantity of the PSCCH, a downlink path loss adjustment coefficient, or the downlink path loss. In a possible implementation, the tenth power value is associated with at least one of a power control initial value of the PSCCH based on a sidelink path loss of the first terminal apparatus, the resource quantity of the PSCCH, a sidelink path loss adjustment coefficient, or the sidelink path loss. In this way, the second power value may be determined with reference to a large quantity of factors, so that the second power value can be determined more properly.

**According to a second aspect,** this application provides a communication method. The method may be performed by a first terminal apparatus. The first terminal apparatus may be a terminal device or a module, a unit, or a chip (system) in the terminal device. The method includes the following.

The first terminal apparatus determines a first power value, where the first power value is associated with a comb value of a reference signal. The first terminal apparatus sends the reference signal based on the first power value.

Because the first power value is associated with the comb value of the reference signal, an average power value of the reference signal on one RE is close to or equal to an average power value of a PSCCH on one RE, so that another terminal device can select a more proper resource based on an RSRP of the PSCCH.

In a possible implementation, the first power value is determined based on an eleventh power value, the eleventh power value is associated with a downlink path loss, and the eleventh power value is determined based on the comb value of the reference signal.

Because the eleventh power value is associated with the downlink path loss, and the eleventh power value is determined based on the comb value of the reference signal, the first power value determined based on the eleventh power value may be more proper, so that the average power value of the reference signal on the one RE is close to the average power value of the PSCCH on the one RE, and the another terminal device can select the more proper resource based on the RSRP of the PSCCH.

In a possible implementation, the eleventh power value is further determined based on at least one of the following parameters:

a power control initial value of the reference signal based on the downlink path loss of the first terminal apparatus, a resource quantity of the reference signal, a downlink path loss adjustment coefficient, or a downlink path loss value.

In this way, the eleventh power value may be determined with reference to a large quantity of factors, so that the eleventh power value can be determined more properly.

In a possible implementation, the first power value is determined based on a twelfth power value, the twelfth power value is associated with a sidelink path loss, and the twelfth power value is determined based on the comb value of the reference signal.

Because the twelfth power value is associated with the sidelink path loss, and the twelfth power value is determined based on the comb value of the reference signal, the first power value determined based on the twelfth power value may be more proper, so that the average power value of the reference signal on the one RE is close to the average power value of the PSCCH on the one RE, and the another terminal device can select the more proper resource based on the RSRP of the PSCCH.

In a possible implementation, the twelfth power value is further determined based on at least one of the following parameters: a power control initial value of the reference signal based on the sidelink path loss of the first terminal apparatus, a resource quantity of the reference signal, a sidelink path loss adjustment coefficient, or a sidelink path loss value. In this way, the twelfth power value may be determined with reference to a large quantity of factors, so that the twelfth power value can be determined more properly.

In a possible implementation, the first power value is determined based on at least one of the following parameters: a transmit power of the first terminal apparatus; or a transmit power of the first terminal apparatus based on a first CBR and a first transmission priority. The first transmission priority includes a transmission priority of the reference signal. In this way, the first power value may be determined with reference to a large quantity of factors, so that the first power value can be determined more properly.

**According to a third aspect,** this application provides a communication method. The method may be performed by a first terminal apparatus. The first terminal apparatus may be a terminal device or a module, a unit, or a chip (system) in the terminal device. The method includes: The first terminal apparatus determines a second power value, where the second power value is associated with at least one of a transmit power of the first terminal apparatus, a downlink path loss of the first terminal apparatus, or a sidelink path loss of the first terminal apparatus. The first terminal apparatus sends a PSCCH based on the second power value.

In this way, the first terminal apparatus may separately determine a power value of the PSCCH. In addition, when the first terminal apparatus does not send a PSSCH, in this solution, the power value of the PSCCH may be determined without depending on a power control solution of the PSSCH, to improve flexibility of the solution.

In a possible implementation, the second power value is determined based on a ninth power value. The ninth power value is associated with at least one of a power control initial value of the PSCCH based on the downlink path loss of the first terminal apparatus, a resource quantity of the PSCCH, a downlink path loss adjustment coefficient, or the downlink path loss.

In this way, the second power value may be determined based on a downlink path loss status, so that the second power value can be determined more properly.

In a possible implementation, the second power value is determined based on a tenth power value. The tenth power value is associated with at least one of a power control initial value of the PSCCH based on the sidelink path loss of the first terminal apparatus, a resource quantity of the PSCCH, a sidelink path loss adjustment coefficient, or the sidelink path loss.

In this way, the second power value may be determined based on a sidelink path loss status, so that the second power value can be determined more properly.

In a possible implementation, the second power value is determined based on the following parameter: a transmit power of the first terminal apparatus based on a second CBR and a second transmission priority, where the second transmission priority is a transmission priority of the PSCCH, a transmission priority of a reference signal, or a transmission priority of the physical sidelink shared control channel PSSCH.

In this way, the second power value may be determined with reference to a large quantity of factors, so that the second power value can be determined more properly.

**According to a fourth aspect,** this application provides a communication apparatus. The communication apparatus may be the foregoing first terminal apparatus, and the communication apparatus may include a communication unit and a processing unit, to perform any one of the implementations of the method in any one of the first aspect to the third aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that may be configured to perform any one of the implementations of the method in any one of the first aspect to the third aspect.

**According to a fifth aspect,** this application provides a communication apparatus. The communication apparatus may be the foregoing first terminal apparatus, and the communication apparatus may include a processor and a memory. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the implementations of the method in any one of the first aspect to the third aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

**According to a sixth aspect,** this application provides a communication apparatus. The communication apparatus may be the foregoing first terminal apparatus, and the communication apparatus may include a processor. The processor is coupled to a memory, and may be configured to perform the method in any one of the first aspect to the third aspect and the possible implementations of the first aspect to the third aspect. Optionally, the communication apparatus further includes the memory. Optionally, the communication apparatus further includes a communication interface, and the processor is coupled to the communication interface.

In an implementation, when the communication apparatus is a wireless communication device, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

**According to a seventh aspect,** this application provides a system. The system includes the foregoing first terminal apparatus.

In a possible implementation, the system may further include a network device. The network device may configure a parameter for the first terminal apparatus, for example, may configure a parameter that needs to be used in a process of calculating a first power value or a second power value. In another possible implementation, the system may further include a terminal apparatus configured to receive a PSCCH and/or a reference signal from the first terminal apparatus.

**According to an eighth aspect,** this application provides a computer program product. The computer program product includes a computer program (which may also be referred to as code or instructions). When the computer program is run, a computer is enabled to perform the method in any one of the possible implementations of the first aspect, or a computer is enabled to perform the method in any one of the implementations of the first aspect to the third aspect.

**According to a ninth aspect,** this application provides a computer-readable storage medium. The computer-readable medium stores a computer program (which may also be referred to as code or instructions). When the computer program is run on a computer, the computer is enabled to perform the method in any one of the possible implementations of the first aspect, or the computer is enabled to perform the method in any one of the implementations of the first aspect to the third aspect.

**According to a tenth aspect,** this application provides a chip system. The chip system may include a processor. The processor is coupled to a memory, and may be configured to perform the method in any one of the first aspect to the third aspect and the possible implementations of the first aspect to the third aspect. Optionally, the chip system further includes the memory. The memory is configured to store a computer program (which may also be referred to as code or instructions). The processor is configured to invoke the computer program from the memory and run the computer program, to enable a device on which the chip system is installed to perform the method in any one of the first aspect to the third aspect and the possible implementations of the first aspect to the third aspect.

**According to an eleventh aspect,** this application provides a communication apparatus. The communication apparatus may be the foregoing first terminal apparatus, and the communication apparatus may include an interface circuit and a processing circuit. The interface circuit may include an input circuit and an output circuit. The processing circuit is configured to receive a signal through the input circuit, and transmit a signal through the output circuit, to enable the method in any one of the first aspect to the third aspect and the possible implementations of the first aspect to the third aspect to be implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of a processor and various circuits are not limited in this application.

In an implementation, when the communication apparatus is a wireless communication device, the wireless communication device may be a terminal like a smartphone, or may be a radio access network device like a base station. The interface circuit may be a radio frequency processing chip in the wireless communication device, and the processing circuit may be a baseband processing chip in the wireless communication device.

In another implementation, the communication apparatus may be a part of devices in the wireless communication device, for example, an integrated circuit product like a system on chip or a communication chip. The interface circuit may be an input/output interface, an interface circuit, an output circuit, an input circuit, a pin, a related circuit, or the like on the chip or a chip system. The processing circuit may be a logic circuit on the chip.

BRIEF DESCRIPTION OF DRAWINGS

FIG. 1 is a diagram of several possible system architectures to which embodiments of this application are applicable;
FIG. 2 is a diagram of a possible network architecture to which an embodiment of this application is applicable;
FIG. 3A is a diagram of sending a reference signal in a comb manner according to an embodiment of this application;
FIG. 3B is another diagram of sending a reference signal in a comb manner according to an embodiment of this application;
FIG. 4A is a diagram of a manner of sending a PSCCH and a reference signal according to an embodiment of this application;
FIG. 4B is a diagram of another manner of sending a PSCCH and a reference signal according to an embodiment of this application;
FIG. 5 is a possible schematic flowchart of a communication method according to an embodiment of this application;
FIG. 6 is a possible schematic flowchart of another communication method according to an embodiment of this application;
FIG. 7 is a possible schematic flowchart of another communication method according to an embodiment of this application;
FIG. 8 is a possible schematic flowchart of another communication method according to an embodiment of this application;
FIG. 9 is a diagram of a structure of a possible communication apparatus according to an embodiment of this application;
FIG. 10 is a diagram of a structure of a possible communication apparatus according to an embodiment of this application; and
FIG. 11 is a diagram of a structure of another possible communication apparatus according to an embodiment of this application.

DESCRIPTION OF EMBODIMENTS

Technical solutions provided in embodiments of this application are mainly applicable to a wireless communication system. The wireless communication system may comply with a wireless communication standard of the 3rd generation partnership project (3rd generation partnership project, 3GPP). For example, the solutions provided in embodiments of this application may be applied to a 4th generation (4th generation, 4G) communication system, for example, a long term evolution (long term evolution, LTE) communication system, may be applied to a 5th generation (5th generation, 5G) communication system, for example, a 5G new radio (new radio, NR) communication system, or may be applied to various future communication systems, for example, a 6th generation (6th generation, 6G) communication system. Alternatively, the technical solutions provided in embodiments of this application may comply with another wireless communication standard, for example, a wireless communication standard of the Institute of Electrical and Electronics Engineers (Institute of Electrical and Electronics Engineers, IEEE) 802 series (for example, 802.11, 802.15, or 802.20).

The method provided in embodiments of this application may be further applied to a Bluetooth system, a wireless fidelity (wireless fidelity, Wi-Fi) system, a long range radio (Long Range Radio, LoRa) system, or a vehicle to everything (vehicle to everything, V2X) system. The method provided in embodiments of this application may be further applied to a satellite communication system, and the satellite communication system may be integrated with the foregoing communication system.

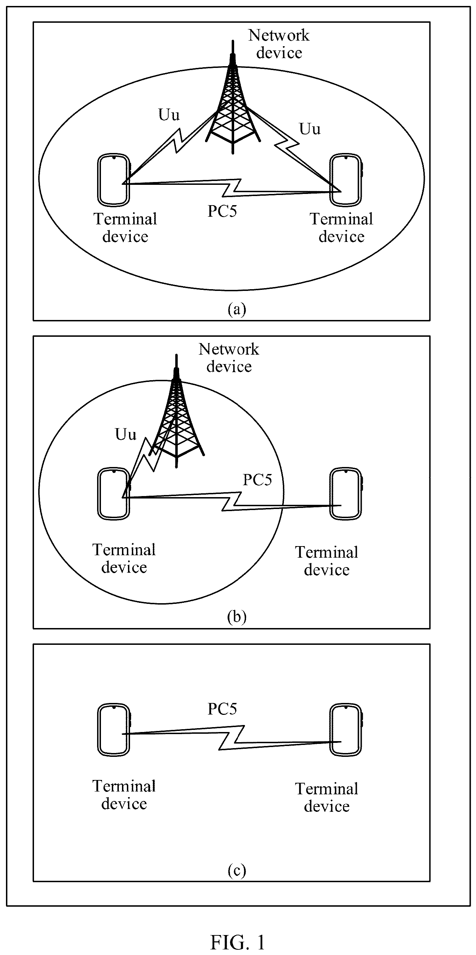

FIG. 1 is an example of a diagram of several possible system architectures to which embodiments of this application are applicable. In FIG. 1, two terminal devices and one network device are used as an example for description. The communication system may further include more other terminal devices and network devices.

(a) in FIG. 1 shows an architecture within coverage of the network device. A PC5 connection is established between the terminal devices, and each terminal device establishes a connection to the network device (for example, a base station). It should be understood that the terminal devices may be connected to a same base station or may be connected to different base stations. In (a) in FIG. 1, an example in which the terminal devices are connected to a same base station is used for illustration. In embodiments of this application, a connection may be established between the terminal device and the base station through a Uu interface.

(b) in FIG. 1 shows an architecture within a part of coverage of the network device. A PC5 connection is established between the terminal devices, a part of the terminal devices do not establish a connection to the network device (for example, a base station), and a remaining part of the terminal devices establish a connection to the network device (for example, the base station).

(c) in FIG. 1 shows an architecture outside coverage of the network device. A PC5 connection is established between the terminal devices, and no terminal device establishes a connection to the network device.

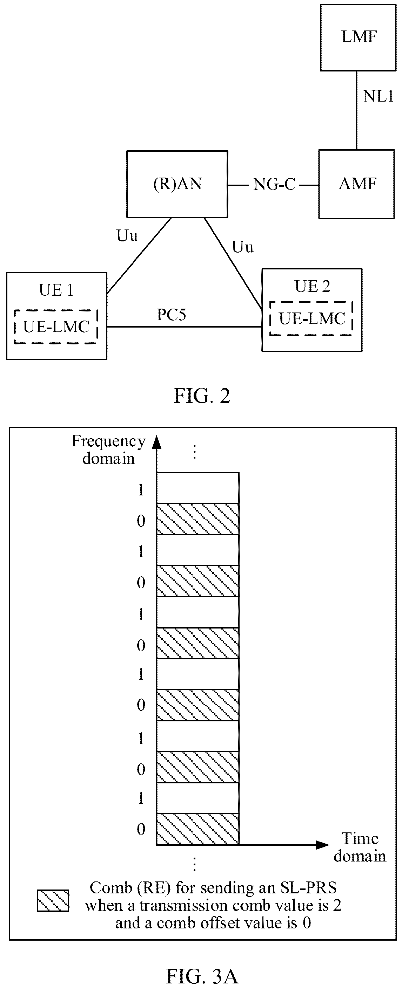

FIG. 2 is an example of a diagram of a possible network architecture to which an embodiment of this application is applicable by using a 5G network architecture as an example. As shown in FIG. 2, the possible network architecture to which this application is applicable may include three parts: terminal devices (for example, UE 1 and UE 2 shown in FIG. 2), an access network device (for example, a next generation (next generation, NG) radio access network ((radio) access network, (R)AN) device), and a core network (core network).

### (1) Terminal device

In embodiments of this application, the terminal devices (for example, the UE 1 and the UE 2 shown in FIG. 2) may include user equipment (user equipment, UE)-location management components (location management components, LMCs). The UE-LMC may be a component or an application that is deployed on the terminal device and that has some LMF functions, and is configured to support a positioning service of a PC5 interface. An LMC in each terminal device in FIG. 2 is displayed as dashed lines, to indicate that the terminal device side may include the LMC, or may not include the LMC. In FIG. 2, an example in which the two terminal devices each include an LMC is used.

The terminal device (for example, the UE 1 or the UE 2 shown in FIG. 2) shown in FIG. 2 in embodiments of this application may be the terminal device in the communication systems shown in FIG. 1. For example, the UE 1 and the UE 2 may be two terminal devices that are located within the coverage of the network device and that are shown in (a) in FIG. 1. For another example, a part of the terminal devices of the UE 1 and the UE 2 may be a terminal device that is located within the coverage of the network device and that is shown in (b) in FIG. 1, and the other part of the terminal devices of the UE 1 and the UE 2 may be a terminal device that is located outside the coverage of the network device and that is shown in (b) in FIG. 1. The UE 1 and the UE 2 may be two terminal devices that are located outside the coverage of the network device and that are shown in (c) in FIG. 1.

The terminal devices (for example, the UE 1 and the UE 2 shown in FIG. 2, and a first terminal apparatus in embodiments of this application) in embodiments of this application may include a device that provides voice and/or data connectivity for a user, for example, may include a handheld device with a wireless connection function or a processing device connected to a wireless modem. The terminal device may communicate with the core network through a radio access network (radio access network, RAN), and exchange a voice and/or data with the RAN. The terminal device may include user equipment (user equipment, UE), a wireless terminal device, a mobile terminal device, a device-to-device (device-to-device, D2D) terminal device, a vehicle-to-everything (vehicle-to-everything, V2X) terminal device (V2X may specifically include several application requirements such as vehicle-to-vehicle (vehicle-to-vehicle, V2V) direct communication, vehicle-to-infrastructure (vehicle-to-infrastructure, V2I) direct communication, vehicle-to-pedestrian (vehicle-to-pedestrian, V2P) direct communication, and vehicle-to-network (vehicle-to-network, V2N) communication interaction), a machine-to-machine/machine-type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal device (remote terminal), an access terminal device (access terminal), a user terminal device (user terminal), a user agent (user agent), a user device (user device), or the like. For example, the terminal device may include a mobile phone (or referred to as a "cellular" phone), a computer having a mobile terminal device, or a portable, pocket-sized, hand-held, or a computer-embedded mobile apparatus. For example, the terminal device may be a device like a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). Alternatively, the terminal device may be a tablet computer or a computer with a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. The terminal device further includes a limited device, for example, a device with low power consumption, a device with a limited storage capability, or a device with a limited computing capability. For example, the terminal device includes an information sensing device like a barcode, a radio frequency identification (radio frequency identification, RFID), a sensor, a global positioning system (global positioning system, GPS), or a laser scanner.

By way of example and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of the user. The wearable device is not only a hardware device, but also implements a powerful function through software support, data exchange, and cloud interaction. In a broad sense, the wearable intelligent device includes a full-featured and large-sized device that can implement all or some functions without depending on a smartphone, for example, a smart watch or smart glasses, and includes a device that is dedicated to only one type of application function and needs to collaboratively work with another device like the smartphone, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs). The terminal device in embodiments of this application may alternatively be a vehicle-mounted module, a vehicle-mounted component, a vehicle-mounted chip, or an on-board unit that is built in the vehicle as one or more components or units. The vehicle may implement the method in this application through the built-in vehicle-mounted module, vehicle-mounted component, vehicle-mounted chip, or on-board unit.

In embodiments of this application, the terminal device may further include a relay (relay). Alternatively, it is understood as that any device that can perform data communication with the base station may be considered as a terminal device.

The terminal device in embodiments of this application may be understood as a device, or may be a module configured to implement a function of the terminal device. The module may be disposed in the terminal device, or may be disposed independently of the terminal device. The module is, for example, a chip system.

**(2)** Network device

The network device may include an access network device and/or a core network device.

**(2.1)** Access network device

The access network (access network, AN) device (for example, a base station) may be a device that communicates with a wireless terminal device over an air interface in an access network through one or more cells. For example, the access network device may include an evolved NodeB (NodeB, eNB, e-NodeB, or evolved NodeB) in an LTE system or a long term evolution-advanced (long term evolution-advanced, LTE-A) system, may include a next generation NodeB (next generation NodeB, gNB) in a 5th generation (the 5th generation, 5G) mobile communication technology new radio (new radio, NR) system, or may include a central unit (central unit, CU) and a distributed unit (distributed unit, DU) in a cloud access network (cloud radio access network, Cloud RAN) system. This is not limited in embodiments of this application.

The eNB may include a macro base station, a micro base station (also referred to as a small cell), a relay station, an access point, a wearable device, and a vehicle-mounted device in various forms. The eNB may alternatively be a transmission reception point (Transmission Reception Point, TRP).

The gNB may include a macro base station, a micro base station (also referred to as a small cell), a relay station, an access point, a wearable device, and a vehicle-mounted device in various forms. The gNB may alternatively be a TRP or a transmission measurement function (Transmission measurement function, TMF). The gNB may include a CU and a DU that are integrated into the gNB.

The terminal device may communicate with a serving base station through a Uu link. For example, the terminal device may communicate with an Ng-eNB through an LTE-Uu link, and may communicate with the gNB through an NR-Uu link. The Ng-eNB is an LTE base station, and the gNB is an NR base station. Base stations may communicate with each other through an Xn interface.

**(2.2)** Core network device

Positioning-related network elements in the core network mainly include: an access and mobility management function (access and mobility management function, AMF) network element, a location management function (location management function, LMF) network element, and the like. The network elements may further include an evolved serving mobile location center (evolutional server mobile location center, E-SMLC) network element, a unified data management (unified data management, UDM) network element, and an application function (application function, AF) network element. The base station may communicate with the AMF network element through an NG-C interface, and the AMF network element may be equivalent to a router for communication between the gNB and the LMF.

The LMF network element may estimate a location of the terminal device, and the AMF communicates with the LMF through an NLs interface.

A location management apparatus in embodiments of this application may be an LMF, a UE-LMC, or the like in FIG. 2, or may be a network element that has a function of the LMF or the UE-LMC in a future communication network like a 6th generation (6th generation, 6G) network. This is not limited in this application.

The following describes the solutions provided in embodiments of this application with reference to the accompanying drawings. Before the description, terms or nouns in embodiments of this application are first explained.

**(1)** Sidelink (sidelink, SL)

In embodiments of this application, the sidelink may be a link established between devices of different types or a same type, for example, may be a link between terminal devices. The link between the terminal devices includes a device-to-device (device-to-device, D2D) link defined in the 3rd generation partnership project (the 3rd Generation Partnership Project, 3GPP) release (release, Rel)-12/13; vehicle-to-vehicle (vehicle-to-vehicle, V2V), vehicle-to-pedestrian (vehicle-to-pedestrian, V2P), vehicle-to-infrastructure (vehicle-to-infrastructure, V2I), vehicle-to-network (vehicle-to-network, V2N), and other links defined by the 3GPP for vehicle to everything; V2X links based on an NR system in Rel-14, Rel-15, Rel-16, Rel-17, Rel-18, and other future releases; and the like.

The sidelink in embodiments of this application may alternatively be. The sidelink in embodiments of this application is the link between the terminal devices. The sidelink may be a link for data communication between two terminal devices through a PC5 interface. The sidelink in embodiments of this application may also be referred to as a direct link, a secondary link, or the like.

**(2)** Reference signal

The reference signal in embodiments of this application may be understood as a reference signal whose transmission is performed on the sidelink between the terminal devices, and may be a reference signal used for positioning. The reference signal in embodiments of this application may also be referred to as a sidelink reference signal or a sidelink positioning reference signal.

The reference signal in embodiments of this application may be a positioning reference signal (positioning reference signal, PRS), the sidelink positioning reference signal (sidelink positioning reference signal, SL-PRS), a demodulation reference signal (demodulation reference signal, DMRS), or a sidelink synchronization signal/physical sidelink broadcast channel block (Sidelink Synchronization signal/physical sidelink broadcast channel block, S-SS/PSBCH block). The reference signal may alternatively be another signal, for example, a signal defined in the future.

In embodiments of this application, some content is described by using an example in which the reference signal is the SL-PRS. The SL-PRS in embodiments of this application may be replaced with another reference signal.

**(3)** Resource pool (resource pool)

New radio (new radio, NR) sidelink communication is performed based on the resource pool. The resource pool is a block of time-frequency resources used for SL communication. Frequency domain resources included in the resource pool are consecutive. Time domain resources included in the resource pool may be consecutive or inconsecutive. Different resource pools are distinguished by SL resource pool identifiers (for example, SL-ResourcePoolID). A terminal apparatus performs receiving in a receive resource pool, and performs sending in a transmit resource pool. If resource pools have a same resource pool index, it can be considered that time-frequency resources in the resource pools completely overlap.

In a sidelink on unlicensed spectrum (Sidelink on unlicensed spectrum, SL-U), a frequency band is shared by terminal apparatuses in a plurality of forms. For example, an SL terminal apparatus, a wireless fidelity (wireless fidelity, Wi-Fi) terminal apparatus, and a Bluetooth terminal apparatus perform transmission in a same frequency band. Therefore, a concept of an SL-dedicated resource pool does not necessarily exist. The SL resource pool may also be understood as a set of resources that may be used for SL transmission. In embodiments, the resource pool may also be referred to as a channel (channel), an operating channel (operating channel), a nominal channel (nominal channel bandwidth), or a bandwidth (bandwidth). In other words, the resource pool, the channel, and the bandwidth all represent a set of resources that may be used for SL transmission.

**(4)** Time domain resource

The time domain resource includes a symbol (symbol), a slot (slot), a mini-slot (mini-slot), a partial slot (partial slot), a sub-frame (sub-frame), a radio frame (frame) (or referred to as a frame), a sensing slot (sensing slot), and the like.
One slot may include at least one symbol, for example, 14 symbols or 12 symbols. There may be different types of slots, and quantities of symbols included in the different types of slots are different. For example, the mini-slot (mini-slot) includes symbols whose quantity is less than 7, for example, two symbols, three symbols, or four symbols, and a common slot (slot) includes seven symbols, 14 symbols, or the like.
Based on different subcarrier spacings, symbol lengths may be different. Therefore, slot lengths may be different. For example, a length of a slot corresponding to a subcarrier spacing of 15 kHz is 0.5 ms, and a length of a slot corresponding to a subcarrier spacing of 60 kHz is 0.125 ms.

**(5)** Frequency domain resource

The frequency domain resource includes a sub-channel, a frequency band (band), a carrier (carrier), a bandwidth part (BandWidth Part, BWP), a resource block (Resource Block, RB), the resource pool, or the like.
The sub-channel is a minimum unit of a frequency domain resource occupied by a physical sidelink shared channel, and one sub-channel may include one or more resource blocks (resource blocks, RBs). A bandwidth of a wireless communication system in frequency domain may include a plurality of RBs. For example, in possible bandwidths of an LTE system, quantities of included physical resource blocks (physical resource blocks, PRBs) may be 6, 15, 25, 50, and the like.
In frequency domain, one RB may include several subcarriers. For example, in the LTE system, one RB includes 12 subcarriers, and each subcarrier spacing may be 15 kHz. Certainly, another subcarrier spacing may alternatively be used, for example, a subcarrier spacing of 3.75 kHz, 30 kHz, 60 kHz, or 120 kHz. This is not limited herein.
For the subcarrier (subcarrier) or a resource element (resource element, RE), the subcarrier or the RE is a minimum frequency resource unit on a specific symbol in a multicarrier system. In embodiments of this application, the RE may be a resource unit of a time-frequency resource, for example, may be considered as a minimum time-frequency resource unit. For example, one RE occupies one symbol in time domain, and occupies one subcarrier in frequency domain. In other words, one subcarrier in one symbol in time domain is one RE. In this application, the subcarrier and the resource element may be used interchangeably, and include same content.

**(6)** Sending of the reference signal in a comb manner

A network device may deliver reference signal resource configuration information to the terminal device by using radio resource control (radio resource control, RRC) signaling or the like. The resource configuration information may include information such as a quantity of antenna ports, a transmission comb value (transmissionComb), and a comb offset value (combOffset). A comb value in embodiments of this application may be the transmission comb value, a value of comb size (value of comb size), or the comb offset value.
The reference signal may be sent in the comb (comb) manner.
The reference signal is sent in the comb (comb) manner in frequency domain. The transmission comb value (transmissionComb), or referred to as the comb value, may be represented as Comb in embodiments of this application. For Comb=N, where N is a positive integer, a mapped reference signal appears at an interval of (N-1) REs in frequency domain, and no transmission is performed on remaining (N-1) REs. Comb=1 indicates that the reference signal occupies contiguous subcarriers in a frequency domain direction. Comb=2 indicates that the reference signal occupies one subcarrier at an interval of one subcarrier in the frequency domain direction, and no transmission is performed on another subcarrier other than a subcarrier used for transmission of the reference signal. Comb=4 indicates that the reference signal occupies one subcarrier at an interval of three subcarriers in the frequency domain direction, and no transmission is performed on other three subcarriers other than a subcarrier used for transmission of the reference signal. A smaller value of the Comb indicates denser frequency domain resources occupied by the reference signal, and a larger value of the Comb indicates sparser frequency domain resources occupied by the reference signal. The network device may further configure a pattern of the reference signal for the terminal device. The pattern of the reference signal may indicate a location of a resource occupied by the reference signal.

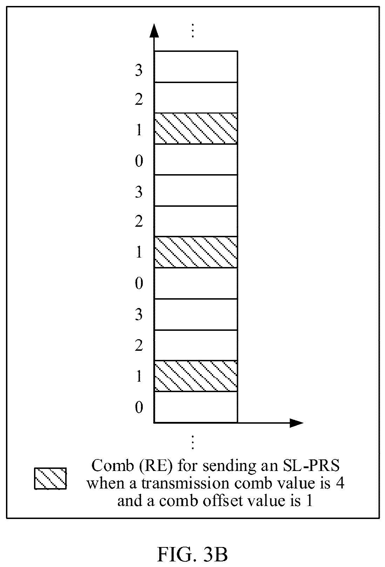

The following uses an example in which the reference signal is the SL-PRS to provide descriptions of sending in the comb manner. The SL-PRS may alternatively be replaced with another reference signal. FIG. 3A and FIG. 3B are diagrams of two examples of sending a reference signal in a comb manner.

As shown in FIG. 3A, one rectangular grid in FIG. 3A represents one RE. When Comb=2, a comb offset value (combOffset) is one value in {0, 1}. A plurality of REs may be divided into a comb 0 numbered 0 (the comb 0 includes all REs numbered 0 in FIG. 3A) and a comb 1 numbered 1 (the comb 1 includes all REs numbered 1 in FIG. 3A). The comb is quantities of resource elements (resource elements, REs) that are occupied at an equal interval on one symbol and that are used to send the reference signal. If the comb offset value (combOffset) is 0, a terminal device sends an SL-PRS on the comb 0, in other words, sends the SL-PRS on all the REs numbered 0 in FIG. 3A. If the comb offset value (combOffset) is 1, the terminal device may send an SL-PRS on the comb 1, in other words, send the SL-PRS on all the REs numbered 1 in FIG. 3A (not shown in FIG. 3A).

As shown in FIG. 3B, one rectangular grid in FIG. 3B represents one RE. When Comb=4, a comb offset value (combOffset) is one value in {0, 1, 2, 3}. A plurality of REs are divided into a comb 0 numbered 0 (the comb 0 includes all REs numbered 0 in FIG. 3B), a comb 1 numbered 1 (the comb 1 includes all REs numbered 1 in FIG. 3B), a comb 2 numbered 2 (the comb 2 includes all REs numbered 2 in FIG. 3B), and a comb 3 numbered 3 (the comb 3 includes all REs numbered 3 in FIG. 3B). If the comb offset is 1, a terminal device sends an SRS on the comb 1. In other words, the terminal device sends the SRS on all the REs numbered 1 in FIG. 3B. If the comb offset value (combOffset) is 2, the terminal device may send an SL-PRS on the comb 2, in other words, send the SL-PRS on all the REs numbered 2 in FIG. 3B (not shown in FIG. 3B).

In embodiments of this application, different comb offsets may be configured for different terminal devices to implement frequency division multiplexing. For example, a comb offset value configured for a terminal device 1 is 0, and a comb offset value configured for a terminal device 2 is 2.

**(7)** Manner of sending a physical sidelink control channel (physical sidelink control channel, PSCCH) and the reference signal

In embodiments of this application, a resource pool of the reference signal may be a shared resource pool, or may be a dedicated resource pool. Resources in the dedicated resource pool may be specially used for transmission of the reference signal. For example, for a possibility of providing a larger bandwidth, the dedicated resource pool is specially designed to ensure the transmission of the reference signal. Resources in the shared resource pool may be used for transmission of a PSSCH, and may also be used for transmission of the reference signal. In a possible example, the terminal device may obtain some symbols from symbols occupied by the PSSCH, to send the reference signal.

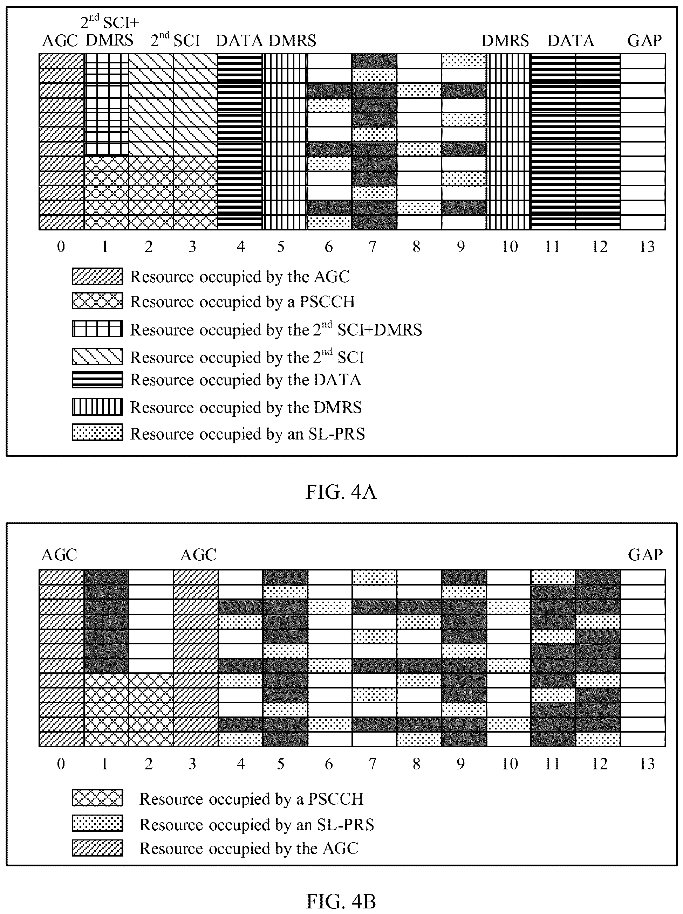

The following uses an example in which the reference signal is the SL-PRS to provide descriptions of sending in the comb manner. The SL-PRS may alternatively be replaced with another reference signal. FIG. 4A and FIG. 4B are diagrams of examples of several manners of sending a PSCCH and a reference signal.

As shown in FIG. 4A, a terminal device sends the PSCCH and a PSSCH. The PSCCH is mapped from a lowest PRB of the PSSCH. The PSCCH and a part of the PSSCH occupy a same symbol but are separated in frequency domain. Resources occupied by the PSSCH include resources occupied by 2nd sidelink control information (sidelink control information, SCI) (the 2nd SCI may also be understood as second SCI or second order SCI, and may be used to carry some control information) and a demodulation reference signal (demodulation reference signal, DMRS), resources occupied by the 2nd SCI, resources occupied by data (data) (marked as DATA in the figure), and resources occupied by the DMRS. As shown in FIG. 4A, the terminal device may further obtain time domain resources through division, to allocate the time domain resources to automatic gain control (Automatic Gain Control, AGC) and a gap (gap) (the gap is marked as a GAP in the figure). As shown in FIG. 4A, transmission of information such as the data or the DMRS may be originally performed at locations of time domain symbols 6, 7, 8, and 9. In a possible example, the locations of the time domain symbols 6, 7, 8, and 9 are used for transmission of an SL-PRS. As shown in FIG. 4A, the SL-PRS may be sent in a comb manner.

As shown in FIG. 4B, the terminal device sends the PSCCH and an SL-PRS. The terminal device may further obtain time domain resources through division, to allocate the time domain resources to AGC and a GAP. The PSCCH and the SL-PRS that are sent by the terminal device may occupy different time domain symbols. A frequency domain bandwidth occupied by the SL-PRS may be greater than a frequency domain bandwidth occupied by the PSCCH (this is used as an example for illustration in FIG. 4B). Alternatively, a frequency domain bandwidth occupied by the SL-PRS may not be greater than a frequency domain bandwidth occupied by the PSCCH. The SL-PRS may be sent in a comb manner. For example, if Comb=4, on one symbol, one SL-PRS is padded at an interval of three REs (as shown in FIG. 4B). If Comb=1, each RE is padded with an SL-PRS.

The following describes an example in which the reference signal is the SL-PRS. In this example, the SL-PRS may alternatively be replaced with another reference signal. For example, on a sending occasion i, a quantity of RBs of the PSCCH is 2, a quantity of RBs of the SL-PRS is 10, and Comb=4. It can be learned that a ratio (a ratio between quantities of RBs) of a resource quantity of the PSCCH to a resource quantity of the SL-PRS on the sending occasion i is 2:10. If when a transmit power of the SL-PRS is configured, the transmit power of the SL-PRS is determined based on the ratio of the resource quantity of the PSCCH to the resource quantity of the SL-PRS while the comb value is not considered, a ratio of a transmit power of the PSCCH to the transmit power of the SL-PRS is also 2:10. Assuming that the transmit power of the PSCCH on the sending occasion i is two power units, the transmit power of the SL-PRS is 10 power units. In some examples in embodiments of this application, for ease of understanding, that a relationship between powers is a ratio relationship is used for description, and a unit of each transmit power is referred to as a "power unit". In embodiments of this application, when units of two powers are referred to as "power units", it may be understood as that the power units of the two powers are the same. In this example, the power unit may be, for example, milliwatt or watt. Because the quantity of RBs of the PSCCH on the sending occasion i is 2, and one RB includes 12 REs, an average transmit power of the PSCCH on one RE is 2/(2*12)=1/12 power units. In addition, because the quantity of RBs of the SL-PRS on the sending occasion i is 10, an average transmit power of the SL-PRS on each RE is 10/(10*12)=1/12 power units. Considering that Comb=4, that is, a first terminal apparatus sends one SL-PRS at an interval of three REs, the first terminal apparatus performs power boosting on an RE used for sending the SL-PRS. After the power boosting, an average power on the RE used for sending the SL-PRS is 4*10/(10*12)=4/12 power units. In embodiments of this application, "/" in a mathematical operation formula may be understood as division, and "*" may be understood as multiplication.

It can be learned from this example that, if when the transmit power of the SL-PRS is calculated, the ratio of the transmit power of the PSCCH to the transmit power of the SL-PRS is directly determined based on the ratio of the resource quantity of the PSCCH to the resource quantity of the SL-PRS while the comb value is not considered, an average transmit power of the SL-PRS on one RE is different from the average transmit power of the PSCCH on the one RE. When the first terminal apparatus selects one resource to send the SL-PRS and the PSCCH, another terminal apparatus measures an RSRP of the PSCCH from the first terminal apparatus. If the RSRP of the PSCCH is less than a threshold, the another terminal apparatus considers that interference to data transmission performed on the resource is small, and then selects to perform data transmission on the resource. However, because the average transmit power of the SL-PRS on the one RE is different from the average transmit power of the PSCCH on the one RE, although the RSRP of the PSCCH on the resource is small, an RSRP of the SL-PRS on the resource may be large. Therefore, the interference to the data transmission performed by the another terminal apparatus on the resource is strong. It can be learned that, because the comb value is not considered when the transmit power of the SL-PRS is calculated, when the another terminal apparatus selects a resource based on the RSRP of the PSCCH, the selected resource may be improper.

Based on the foregoing problem, embodiments of this application provide several possible implementations. The first terminal apparatus may determine the transmit power of the PSCCH or the SL-PRS based on at least the comb value. Because the first terminal apparatus considers the comb value when determining the transmit power of the PSCCH or the SL-PRS, there is an association relationship between the average transmit power of the SL-PRS on the one RE and the average transmit power of the PSCCH on the one RE, so that the RSRP that is of the PSCCH and that is measured by the another terminal apparatus can reflect the RSRP of the SL-PRS. In this way, the another terminal apparatus can select a proper resource when performing resource selection based on the measured RSRP of the PSCCH.

Beneficial effects of embodiments of this application are described with reference to the foregoing examples. Because the comb value is considered in embodiments of this application, in a possible implementation, a ratio of a second power value to a first power value is (4*2/10)=2:2.5. The average power of the PSCCH on the one RE is 1/12 power units. An average power of the reference signal on each RE is 2.5/(10*12) power units. Considering that Comb=4, that is, the first terminal apparatus sends one reference signal at an interval of three REs, the first terminal apparatus performs power boosting on an RE used for sending the reference signal. After the power boosting, an average power on the RE is 4*2.5/120=1/12 power units. It can be learned from this example that the power ratio of the PSCCH to the reference signal on the sending occasion i is not 2:10, but 2:2.5. Therefore, an average power value of the PSCCH on the one RE may be equal to (or is close to in some examples) an average power value of the reference signal on the one RE, so that when the another terminal apparatus measures the RSRP of the PSCCH from the first terminal apparatus, the RSRP of the PSCCH can reflect the RSRP of the reference signal. In this way, the another terminal apparatus can select the proper resource when performing resource selection based on the measured RSRP of the PSCCH.

The following further describes embodiments of this application with reference to the foregoing content and the accompanying drawings.

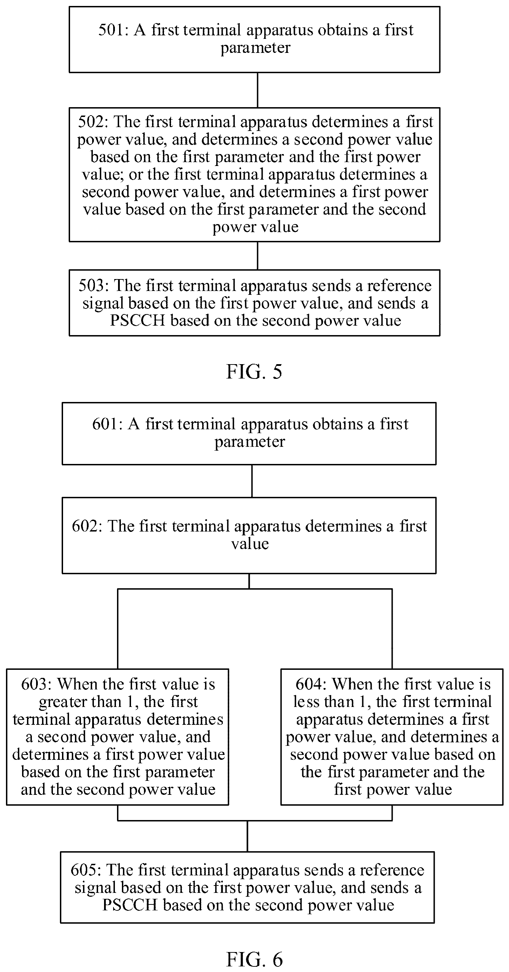

Based on the embodiments shown in FIG. 1, FIG. 2, FIG. 3A, FIG. 3B, FIG. 4A, and FIG. 4B, and the foregoing other content, **FIG. 5** is a possible schematic flowchart of an example of a communication method according to an embodiment of this application. The method is presented by using an example in which an execution body is a first terminal apparatus. The first terminal apparatus may be the terminal device in FIG. 1, FIG. 2, FIG. 3A, FIG. 3B, FIG. 4A, or FIG. 4B, or a unit, a module, or a chip (system) in the terminal device.

As shown in **FIG. 5,** the method includes the following steps.

**Step 501:** The first terminal apparatus obtains a first parameter.

The first parameter includes at least one of a comb value of a reference signal, a resource quantity of the reference signal, or a resource quantity of a PSCCH.

The reference signal in this embodiment of this application may be a reference signal transmitted by the first terminal apparatus through a sidelink, for example, may be a reference signal transmitted through a PC5 interface. The reference signal may be a reference signal used for positioning. For example, a measurement result of the reference signal may be used for positioning the first terminal apparatus or another apparatus. The reference signal may also be referred to as a sidelink reference signal, a sidelink positioning reference signal, or the like. For a related example of the reference signal, refer to the foregoing descriptions. Details are not described again.

The comb value of the reference signal in this embodiment of this application may be understood as a value of the Comb in the foregoing process of sending the reference signal in a comb manner. For Comb=N, where N is a positive integer, a mapped reference signal (for example, a reference signal) appears at an interval of N REs in frequency domain, and no transmission is performed on remaining (N-1) REs. The comb value may also have another name, for example, a transmission comb value. The name is not limited in this embodiment of this application.

The resource quantity of the reference signal in this embodiment of this application may include a quantity of RB resources occupied by the reference signal in frequency domain, or is a quantity of RE resources occupied by the reference signal in frequency domain, a quantity of sub-channels occupied by the reference signal in frequency domain, or the like.

The resource quantity of the PSCCH in this embodiment of this application may include a quantity of RB resources occupied by the PSCCH in frequency domain, or is a quantity of RE resources occupied by the PSCCH in frequency domain, a quantity of sub-channels occupied by the PSCCH in frequency domain, or the like.

In a possible embodiment, the resource quantity of the reference signal and the resource quantity of the PSCCH in this embodiment of this application may be a resource quantity (for example, a quantity of RBs) of the reference signal and a resource quantity (for example, a quantity of RBs) of the PSCCH on a sending occasion i. The sending occasion i may be, for example, a sending occasion whose index is i. The sending occasion i may alternatively be written as a transmission occasion i in English. The sending occasion may be understood as sending time. Sending time i may also be understood as a time unit, and the time unit may include one or more slots, one or more sub-slots, one or more time domain symbols, one or more sub-slots, one or more time domain sub-frames, or the like, where i may be a positive integer, or i may be either of 0 and a positive integer.

For example, one slot includes a plurality of time domain symbols, and the slot includes a resource of the PSCCH and a resource of the reference signal. In this embodiment of this application, the resource quantity of the PSCCH may be a quantity of RBs occupied by the PSCCH in the slot, and the resource quantity of the reference signal may be a quantity of RBs occupied by the reference signal in the slot. With reference to FIG. 4B, the resource quantity of the PSCCH in this embodiment of this application may be a quantity of RBs occupied by the PSCCH on a time domain symbol 1 and a time domain symbol 2 in FIG. 4B, and the resource quantity of the reference signal in this embodiment of this application may be a quantity of RBs occupied by the reference signal on a time domain symbol 4, a time domain symbol 5, a time domain symbol 6, a time domain symbol 7, a time domain symbol 8, a time domain symbol 9, a time domain symbol 10, a time domain symbol 11, and a time domain symbol 12 in FIG. 4B.

**Step 502:** The first terminal apparatus determines a first power value, and determines a second power value based on the first parameter and the first power value; or the first terminal apparatus determines a second power value, and determines a first power value based on the first parameter and the second power value.

**Step 503:** The first terminal apparatus sends the reference signal based on the first power value, and sends the PSCCH based on the second power value.

Correspondingly, another terminal apparatus (for example, a terminal apparatus other than the first terminal apparatus) receives the reference signal. The another terminal apparatus (for example, the terminal apparatus other than the first terminal apparatus) receives the PSCCH.

Because one of the first power value and the second power value is determined based on the first parameter and the other one of the first power value and the second power value, it may be considered as that there is an association relationship between the first power value and the second power value, so that an average power value of the reference signal on one RE (for example, one RE) is associated with an average power value of the PSCCH on one RE (for example, one RE). In this way, the another terminal apparatus can select a more proper resource with reference to a channel condition of the PSCCH. In this embodiment of this application, an average power on one RE may also be referred to as energy per RE (energy per RE, EPRE).

For example, there is also an association relationship between an RSRP of the PSCCH and an RSRP of the reference signal, in other words, the RSRP of the PSCCH may reflect the RSRP of the reference signal. Therefore, when the another terminal apparatus performs resource selection, the RSRP that is of the PSCCH and that is measured by the another terminal apparatus may reflect the RSRP of the PSCCH and the RSRP of the reference signal. Therefore, when the another terminal apparatus selects a resource on which an RSRP of the PSCCH is less than a threshold, an RSRP of the reference signal on the resource may also be small, that is, interference to data transmission performed by the another terminal apparatus on the resource is small.

In addition, in this embodiment of this application, an average transmit power of the reference signal on one RE is associated with, for example, close or equal to, an average transmit power of the PSCCH on one RE. With reference to FIG. 4B, if a quantity of resources occupied by the PSCCH on one time domain symbol is different from a quantity of resources occupied by the reference signal on one time domain symbol, the PSCCH and the reference signal have different symbol-level transmit powers. To ensure that a transmitting end has time to adjust the symbol-level transmit power, the first terminal apparatus may configure AGC between the PSCCH and the reference signal, so that the first terminal apparatus has sufficient time to adjust the transmit power, and a receiving end can also have sufficient adjustment time.

The following describes two possible implementations of step 302 by using an **implementation A** and an **implementation B.** Implementation A: The first terminal apparatus determines the first power value, and determines the second power value based on the first parameter and the first power value. Implementation B: The first terminal apparatus determines the second power value, and determines the first power value based on the first parameter and the second power value.

**Implementation A:** The first terminal apparatus determines the first power value, and determines the second power value based on the first parameter and the first power value.

In this embodiment of this application, there may be an association relationship between the second power value and the first power value. For example, a mathematical operation result (for example, a quotient, a difference, a sum, or a product) between the second power value and the first power value may be associated with the first parameter.

For example, the mathematical operation result (for example, the quotient, the difference, the sum, or the product) between the second power value and the first power value may be associated with a first value.

The first value includes a quotient of a product of the resource quantity of the PSCCH and the comb value of the reference signal and the resource quantity of the reference signal. For example, the first value is the quotient of the product of the resource quantity of the PSCCH and the comb value of the reference signal and the resource quantity of the reference signal. Alternatively, the first value is a value associated with the quotient. For example, the first value is a result obtained by performing some mathematical operations on another parameter and the quotient.

The first value may alternatively be expressed in another manner. The first value may alternatively include a difference between a sum of the resource quantity of the PSCCH and the comb value of the reference signal and the resource quantity of the reference signal. For example, the first value is the difference between the sum of the resource quantity of the PSCCH and the comb value of the reference signal and the resource quantity of the reference signal. Alternatively, the first value is a value associated with the difference. For example, the first value is a result obtained by performing some mathematical operations on another parameter and the difference.

For example, the mathematical operation result (for example, the quotient or the difference) between the second power value and the first power value may be the first value. For another example, the mathematical operation result between the second power value and the first power value may be a mathematical operation result between a preset value and the first value. The preset value may be, for example, a preset adjustment value, and the mathematical operation result between the preset value and the first value may be, for example, a mathematical operation result like a sum of, a product of, a difference between, or a quotient of the preset value and the first value. For another example, an association relationship is established between the mathematical operation result between the second power value and the first power value and the first value according to some formulas. For another example, the mathematical operation result (for example, the sum or the product) between the second power value and the first power value may be an associated value of a reciprocal of the first value.

In the implementation A, in a possible implementation, the first terminal apparatus determines the first power value, and the first terminal apparatus determines the second power value based on the first power value and the first value.

In a possible implementation, the second power value is a sum or a product of the first power value and the first value.

The following describes, according to a formula (1), an example of a manner of calculating the power value of the PSCCH:

$$P_{PSCCH}(i) = P_{PRS}(i) + 10lg\left(\frac{Comb*M_{RB}^{PSCCH}(i)}{M_{RB}^{PRS}(i)}\right)[dBm] \ \textbf{Formula (1)}$$

In the formula (1), $P_{PSCCH}(i)$ represents a transmit power of the PSCCH on the sending occasion i, $P_{PRS}(i)$ represents a transmit power of the reference signal on the sending occasion i, Comb represents the comb value of the reference signal, $M_{RB}^{PSCCH}(i)$ represents the resource quantity (for example, the quantity of RBs of the PSCCH) of the PSCCH on the sending occasion i, and $M_{RB}^{PRS}(i)$ represents the resource quantity (for example, the quantity of RBs of the reference signal) of the reference signal on the sending occasion i.

In each formula in this embodiment of this application, *log* is a logarithm, *lg* represents a logarithm to base 10, and lg may alternatively be replaced with $log_{10}$. In this embodiment of this application, $log_{10}$ is used to also represent a logarithm to base 10. In each formula in this embodiment of this application, $101(\cdot)$ may be understood as $10*lg(\cdot)$, where * represents multiplication, that is, understood as a product of 10 and $lg(\cdot)$, where $lg(\cdot)$ represents a logarithm of a parameter in the parentheses to base 10. For example, $10lg\left(\frac{Comb*M_{RB}^{PSCCH}(i)}{M_{RB}^{PRS}(i)}\right)$ represents a logarithm of $\frac{Comb*M_{RB}^{PSCCH}(i)}{M_{RB}^{PRS}(i)}$ to base 10. Content in this part is also applicable to another formula, and is not described again in another formula.

In this embodiment of this application, a subscript "PRS" appears in each formula, for example, $P_{PRS}(i)$. The subscript "PRS" indicates that this embodiment of this application is described by using an example in which the reference signal is a PRS or an SL-PRS, and a parameter in the formula is described also by using the example in which the reference signal is the PRS or the SL-PRS. The reference signal may alternatively be replaced with another signal. In this case, a representation manner of a related parameter of the reference signal may be changed. For example, if the reference signal is neither the PRS nor the SL-PRS, the subscript of the parameter $P_{PRS}(i)$ may be changed accordingly. Content in this part is also applicable to another formula, and is not described again in another formula.

In this embodiment of this application, a subscript "PSCCH" appears in each formula, for example, $P_{PSCCH}(i)$. The subscript "PSCCH" may indicate that the parameter is a parameter related to the PSCCH. Content in this part is also applicable to another formula, and is not described again in another formula.

In this embodiment of this application, a transmit power of the PSCCH on a sidelink BWP b of a carrier f on the sending occasion i may also be represented as $P_{PSCCH}(i)$ in each formula. A transmit power of the reference signal on the sidelink BWP b of the carrier f on the sending occasion i may also be represented as $P_{PRS}(i)$. In this application, the carrier f indicates that an index identifier of the carrier is f, and the BWP b indicates that an index identifier of the BWP is b. In Uu, one carrier may support a plurality of BWPs, and in the sidelink, one carrier may support one BWP. In this embodiment of this application, for ease of understanding, an example in which an index of a carrier is identified as f and an index of a BWP is identified as b is used for description, where f may be either of 0 and a positive integer, b may be either of 0 and a positive integer, and values of f and b may be set based on an actual situation. Content in this part is also applicable to another formula, and is not described again in another formula.

In this embodiment of this application, in $P_{PSCCH}(i)$ and $P_{PRS}(i)$, i in the parentheses may be understood as the sending occasion i, the sending occasion i may be understood as a time unit, and an index of the time unit is identified as i in this application. The sending occasion i may alternatively be written as the transmission occasion i in English. The time unit may be understood as a unit in a time domain direction. For example, the time unit may be one or more slots, one or more sub-slots, one or more time domain symbols, one or more sub-slots, or one or more time domain sub-frames, where i may be a positive integer, or i may be either of 0 and a positive integer. Content in this part is also applicable to another formula, and is not described again in another formula.

In the formula (1), an example in which the resource quantity is the quantity of RBs is used for description. Therefore, subscripts of $M_{RB}^{PSCCH}(i)$ and $M_{RB}^{PRS}(i)$ in the formula (1) each are an RB. If the resource quantity needs to be calculated in another unit in some implementations, the subscript RB in the formula provided in this embodiment of this application may alternatively be replaced. For example, in this embodiment of this application, if the resource quantity is calculated in an RE, the subscripts of $M_{RB}^{PSCCH}(i)$ and $M_{RB}^{PRS}(i)$ may alternatively be replaced from the RB to the RE.

In this embodiment of this application, dBm (for example, [*dBm*] at the end of the formula (1) and another formula) in each formula represents a unit: decibel relative to one milliwatt (decibel relative to one milliwatt, dBm) of a parameter that needs to be calculated in the formula. For example, [*dBm*] at the end of the formula (1) indicates that a unit of the parameter $P_{PSCCH}(i)$ that needs to be calculated in the formula (1) is dBm. A unit of another parameter of a power value in the formula may be converted into dBm. For example, a unit of $P_{PRS}(i)$ in the formula (1) may be converted into dBm. Content in this part is also applicable to another formula, and is not described again in another formula.

When a unit in each formula changes, each formula in this embodiment of this application may also change. For example, when the unit in the foregoing formula (1) is not dBm, the foregoing formula (1) may alternatively be replaced with the following formula: $P_{PSCCH}(i) = P_{PRS}(i) * \left(\frac{Comb*M_{RB}^{PSCCH}(i)}{M_{RB}^{PRS}(i)}\right)$ or

$P_{PSCCH}(i) = P_{PRS}(i) / \left(\frac{M_{RB}^{PRS}(i)}{Comb*M_{RB}^{PSCCH}(i)}\right)$. In the formula, $P_{PSCCH}(i)$ represents the transmit power of the PSCCH on the sending occasion i, and $P_{PRS}(i)$ represents the transmit power of the reference signal on the sending occasion i. A difference between the formula and the formula (1) lies in that units of $P_{PSCCH}(i)$ and $P_{PRS}(i)$ in the formula are not dBm, and may be, for example, watts or milliwatts. For meanings of other parameters in the formula, refer to the descriptions of the formula (1).

In each formula in this embodiment of this application, "*" represents multiplication, and "/" represents division. Content in this part is also applicable to other formulas, and is not described again in other parts.

The first terminal apparatus may calculate the second power value according to the foregoing formula (1). With reference to the foregoing formula (1), it can be learned that, if the second power value is $P_{PSCCH}(i)$, the first power value may be equivalent to $P_{PRS}(i)$, and the first value may be understood as $\frac{Comb * M_{RB}^{PSCCH}(i)}{M_{RB}^{PRS}(i)}$ in the formula (1), or the first value may be understood as $10lg(\frac{Comb * M_{RB}^{PSCCH}(i)}{M_{RB}^{PRS}(i)})$ in the formula (1).

The first value may alternatively be expressed as any one of the following formulas. For meanings of related parameters, refer to the descriptions of the foregoing formula (1). Details are not described again:

$$10lg(Comb)+10lg(M_{RB}^{PSCCH}(i))-10lg(M_{RB}^{PRS}(i));$$

$$10lg(Comb*M_{RB}^{PSCCH}(i))-10lg(M_{RB}^{PRS}(i));$$

$$10lg(Comb)+10lg(M_{RB}^{PSCCH}(i)/M_{RB}^{PRS}(i));$$

$$10lg(Comb/M_{RB}^{PRS}(i))+10lg(M_{RB}^{PSCCH}(i));$$

$$1/\frac{M_{RB}^{PRS}(i)}{Comb*M_{RB}^{PSCCH}(i)};$$

$$-10lg\left(\frac{M_{RB}^{PRS}(i)}{Comb*M_{RB}^{PSCCH}(i)}\right);$$

$$-10lg(Comb)-10lg(M_{RB}^{PSCCH}(i))+10lg(M_{RB}^{PRS}(i));$$

$$-10lg(Comb*M_{RB}^{PSCCH}(i))+10lg(M_{RB}^{PRS}(i));$$

$$-10lg(Comb)-10lg(M_{RB}^{PSCCH}(i)/M_{RB}^{PRS}(i));$$

or

$$-10lg(Comb/M_{RB}^{PRS}(i))-10lg(M_{RB}^{PSCCH}(i)).$$

Alternatively, there may be another association relationship between the first power value, the second power value, and the first value (for example, the three parameters may alternatively form another mathematical operation formula in combination with another parameter). For example, the foregoing formula (1) may alternatively be replaced with one of the following formulas. Meanings of related parameters are the same as those in the formula (1). Details are not described again:

$$P_{PSCCH}(i) = P_{PRS}(i) + 10lg(Comb) + 10lg(M_{RB}^{PSCCH}(i)) - 10lg(M_{RB}^{PRS}(i))[dBm];$$

$$P_{PSCCH}(i) = P_{PRS}(i) + 10lg(Comb*M_{RB}^{PSCCH}(i)) - 10lg(M_{RB}^{PRS}(i))[dBm];$$

$$P_{PSCCH}(i) = P_{PRS}(i) + 10lg(Comb) + 10lg(M_{RB}^{PSCCH}(i)/M_{RB}^{PRS}(i))[dBm];$$

$$P_{PSCCH}(i) = P_{PRS}(i) + 10lg(Comb/M_{RB}^{PRS}(i)) + 10lg(M_{RB}^{PSCCH}(i))[dBm];$$

or

$$P_{PSCCH}(i) = P_{PRS}(i) - 10lg(\frac{M_{RB}^{PRS}(i)}{Comb*M_{RB}^{PSCCH}(i)})[dBm].$$

In the implementation A, the first terminal apparatus determines the first power value in a plurality of manners. The following uses an implementation A1, an implementation A2, an implementation A3, and an implementation A4 as examples for description.

**Implementation A1:** The first power value is determined based on at least one of the following parameters: a transmit power of the first terminal apparatus; a transmit power of the first terminal apparatus based on a first CBR and a first transmission priority; a fifth power value; or a sixth power value.

In a possible example, the first power value may be obtained according to the following formula (2):

$$P_{PRS}(i) = min(P_{CMAX}, P_{MAX,CBR,1}, min(P_{PRS,D}(i), P_{PRS,SL}(i))) \text{ [dBm]} \quad \textbf{Formula (2)}$$

In the formula (2), $P_{PRS}$? (i) represents the transmit power of the reference signal on the sending occasion i ($P_{PRS}$? (i) may be considered as the first power value), $P_{CMAX}$ represents the transmit power of the first terminal apparatus, $P_{MAX,CBR,1}$ represents the transmit power of the first terminal apparatus based on the first CBR and the first transmission priority, $P_{PRS,D}$? (i) represents the fifth power value, and $P_{PRS,SL}$? (i) represents the sixth power value.

In this embodiment of this application, min(a, b) indicates to take a smaller value in the parameter a and the parameter b. The parameter a and the parameter b are used as an example to describe a meaning of min herein. In this embodiment of this application, "" represents multiplication. Content in this paragraph is also applicable to other parts, and is not described again.

In this embodiment of this application, "1" in a subscript of is used to distinguish $P_{MAX,CBR,1}$ from in a subsequent formula like a formula (12). and in this embodiment of this application may be the same or different. In a possible implementation, and are the same, and both may be represented as .

The foregoing formula (2) may also have some other variations. For example, some other parameters may be added to or reduced from the formula (2), or some weights may be set for some parameters in the formula (2). In a possible implementation, the formula (2) may alternatively be transformed into the following formula:

$P_{PRS}$? (i) = min? ($P_{CMAX}$, $P_{MAX,CBR,1}$, $P_{PRS,D}$? (i), $P_{PRS,SL}$? (i)) [dBm]. For meanings of parameters in the formula, refer to the related descriptions of the formula (2). Details are not described again.

In addition to the foregoing example, the first terminal apparatus may alternatively determine the first power value in another manner. For example, the first terminal apparatus may determine a smaller value in the fifth power value and the sixth power value as the first power value. In this way, the first power value can be reduced as much as possible, thereby reducing power consumption of the terminal device. For another example, the first terminal apparatus may determine a smallest value in the fifth power value, the sixth power value, and a specified value as the first power value, where the specified value is a smaller value or a larger value in $P_{CMAX}$ and $P_{MAX,CBR,1}$. For example, the first terminal apparatus is far away from a network device, but the first terminal apparatus is close to a second terminal apparatus. Therefore, a downlink path loss may be large, the fifth power value may be large, a sidelink path loss may be small, and the sixth power value may be small. If the larger value in $P_{CMAX}$ and $P_{MAX,CBR,1}$ is selected as the specified value, for example, if the specified value is $P_{CMAX}$, the first terminal apparatus may further determine the first power value based on $P_{CMAX}$. For example, the sixth power value may be selected as the first power value. In this way, a communication requirement between terminal devices (between the first terminal apparatus and the second terminal apparatus) can be ensured as much as possible.

The following further describes the parameters in the formula (2) by using a parameter A1.1, a parameter A1.2, a parameter A1.3, and a parameter A1.4.

**Parameter A1.1:** $P_{CMAX}$

In this embodiment of this application, $P_{CMAX}$ may be understood as the transmit power of the first terminal apparatus, and may be, for example, a maximum transmit power of the first terminal apparatus. In this way, a target transmit power may be determined based on the transmit power of the terminal device, so that the determined target transmit power better matches the transmit power of the terminal device.

**Parameter A1.2:** $P_{MAX,CBR,1}$

$P_{MAX,CBR,1}$ includes the transmit power of the first terminal apparatus based on the first CBR and the first transmission priority. The first transmission priority may be a priority of the reference signal. In some possible embodiments, the first transmission priority may alternatively be a priority of the PSCCH or a priority of a PSSCH.

The first CBR may be understood as a CBR of a resource pool corresponding to the reference signal. In this way, the first terminal apparatus may determine the first power value based on the transmit power of the first terminal apparatus based on the first CBR and the first transmission priority, so that the first power value can better match an actual transmit power of the first terminal apparatus. The first CBR in this embodiment of this application may alternatively be a CBR of a resource pool corresponding to the PSCCH, or a CBR of a resource pool corresponding to the PSSCH. The first CBR may be the same as or different from a subsequent second CBR.

For example, $P_{MAX,CBR,1}$ may be a maximum transmit power of the first terminal apparatus based on the first CBR and the first transmission priority. $P_{MAX,CBR,1}$ may be indicated by a parameter (the parameter may have a plurality of names, for example, the parameter may be referred to as sl-MaxTxPower-RS) delivered by the network device. $P_{MAX,CBR,1}$ may be carried in an RRC message, or carried in a sidelink resource pool (SL-resource Pool) message. In some cases, the network device may not configure $P_{MAX,CBR,1}$ for the first terminal apparatus, and the first terminal apparatus may not consider $P_{MAX,CBR,1}$ when determining the first power value, or the first terminal apparatus may consider that $P_{MAX,CBR,1}$ and $P_{CMAX}$ are equal.

**Parameter A1.3: Fifth power value**

The fifth power value is associated with at least one of a power control initial value of the reference signal based on the downlink path loss of the first terminal apparatus, the resource quantity of the reference signal, a downlink path loss adjustment coefficient, or a downlink path loss value.

In a possible implementation, the fifth power value is obtained according to the following formula:

$$P_{PRS,D}(i) = P_{O_{PRS},D} + 10\log_{10}\left(2^{\mu_1} \cdot M_{RB}^{PRS}(i)\right) + \alpha_{D1} \cdot PL_{D1} \text{ [dBm]} \qquad \textbf{Formula (3)}$$

In the formula (3), $P_{PRS,D}?(i)$ represents the fifth power value, $P_{O_{PRS},D}$ represents the power control initial value of the reference signal based on the downlink path loss of the first terminal apparatus, $\mu_1$ represents a preset value (which may be a preconfigured value), $M_{RB}^{PRS}(i)$ represents the quantity (for example, the quantity of RBs of the reference signal) of resources occupied by the reference signal on the sending occasion i, $\alpha_{D1}$ represents the downlink path loss adjustment coefficient, and $PL_D$ represents the downlink path loss value.

In this embodiment of this application, a subscript "D" in the formula may also be understood as an initial letter of downlink, and may be understood as a downlink. A meaning of a subscript "D" in another formula is similar, and is not described again.

In this embodiment of this application, "1" in a subscript of $\mu_1$ is used to distinguish $\mu_1$ from $\mu_2$, $\mu_3$, and $\mu_4$ in this embodiment of this application. In this embodiment of this application, any two of $\mu_1$, $\mu_2$, $\mu_{3=}$ and $\mu_4$ may be different or the same. When any two of $\mu_1$, $\mu_2$, $\mu_{3=}$ and $\mu_4$ are the same, same parameters may be represented as a same parameter. For example, a plurality of same parameters may be represented as $\mu$. In this embodiment of this application, "1" in a subscript of $\alpha_{D1}$ is used to distinguish $\alpha_{D1}$ from $\alpha_{D2}$ in a part like a formula (13) in this embodiment of this application. In this embodiment of this application, $\alpha_{D1}$ and $\alpha_{D2}$ may be different or the same. When $\alpha_{D1}$ and $\alpha_{D2}$ are the same, both may be represented as $\alpha_D$. In this embodiment of this application, "1" in a subscript of is used to distinguish $PL_{D1}$ from P, L-D2. in a part like the formula (13) in this embodiment of this application. In this embodiment of this application, and may be different or the same. When and are the same, both may be represented as .

In the formula (3), $P_{O_{PRS},D}$ may be a preconfigured value, for example, may be configured by using a dl-P0-RS parameter in an RRC message (for example, an SL-ResourcePool message). For another example, in the formula (3), $\alpha_{D1}$ may be a preconfigured value, for example, may be configured by using a dl-Alpha-RS parameter in an RRC message (for example, an SL-ResourcePool message). If $\alpha_{D1}$ is not configured, $\alpha_{D1}$ may be considered as 1.

The first terminal apparatus may estimate the downlink path loss based on a downlink signal. For example, in the formula (3), $PL_{D1} = PL_{b,f,c}(q_d)$, that is, the first terminal apparatus may estimate the downlink path loss value by using a reference signal whose reference signal resource index is $q_d$. Specifically, the downlink path loss value may be obtained by subtracting an RSRP obtained by the first terminal apparatus by measuring the reference signal whose reference signal index is $q_d$ from a transmit power of the reference signal, and the transmit power may be obtained by the first terminal apparatus from the network device.

When the network device does not configure some parameters in the formula (3), the first terminal apparatus may not consider the fifth power value in a process of determining the first power value. Alternatively, the fifth power value may be represented by using a formula: $P_{PRS,D}?(i) = min(P_{CMAX}, P_{MAX,CBR})[dBm]$. For meanings of parameters in the formula, refer to content of the foregoing formula (2). Details are not described again.

In this embodiment of this application, the fifth power value may alternatively be determined in another manner. For example, the fifth power value is a sum of $P_{O_{PRS},D}$ and the downlink path loss value in the formula (3). For another example, the fifth power value is determined based on $P_{O_{PRS},D}$ and the quantity of resources occupied by the reference signal on the sending occasion i in the formula (3). The foregoing formula (3) is merely a possible example.

**Parameter A1.4: Sixth power value**

The sixth power value is associated with at least one of a power control initial value of the reference signal based on the sidelink path loss of the first terminal apparatus, the resource quantity of the reference signal, a sidelink path loss adjustment coefficient, or a sidelink path loss value.

In a possible implementation, the sixth power value is obtained according to the following formula:

$$P_{PRS,SL}(i) = P_{O_{PRS},SL} + 10\log_{10}\left(2^{\mu_2} \cdot M_{RB}^{PRS}(i)\right) + \alpha_{SL1} \cdot PL_{SL1}[dBm] \qquad \textbf{Formula (4)}$$

In the formula (4), $P_{PRS,SL}?i)$ represents the sixth power value, $P_{O_{PRS},SL}$ represents the power control initial value of the reference signal based on the sidelink path loss of the first terminal apparatus, $\mu_2$ represents a preset value (which may be a preconfigured value), $M_{RB}^{PRS}(i)$ represents the quantity (for example, the quantity of RBs of the reference signal) of resources occupied by the reference signal on the sending occasion i, $\alpha_{SL1}$ represents the sidelink path loss adjustment coefficient, and $PL_{SL}$ represents the sidelink path loss value.

In this embodiment of this application, a subscript "SL" in the formula may also be understood as an abbreviation of sidelink, and may be understood as a sidelink. A meaning of a subscript "SL" in another formula is similar, and is not described again.

In this embodiment of this application, "1" in a subscript of $\alpha_{SL1}$ is used to distinguish $\alpha_{SL1}$ from $\alpha_{SL2}$ in a part like a formula (14) in this embodiment of this application. In this embodiment of this application, $\alpha_{SL1}$ and $\alpha_{SL2}$ may be different or the same. When $\alpha_{SL1}$ and $\alpha_{SL2}$ are the same, both may be represented as $\alpha_{SL}$. In this embodiment of this application, "1" in a subscript of is used to distinguish $PL_{SL1}$ from in a part like the formula (14) in this embodiment of this application. In this embodiment of this application, and may be different or the same. When and are the same, both may be represented as .

In the formula (4), $P_{O_{PRS},SL}$ may be a preconfigured value, for example, may be configured by using an sl-P0-RS parameter in an RRC message (for example, an SL-Powercontrol message). For another example, in the formula (4), $\alpha_{SL1}$ may be a preconfigured value, for example, may be configured by using an sl-Alpha-RS parameter in an RRC message (for example, an SL-Powercontrol message). If $\alpha_{SL1}$ is not configured, $\alpha_{SL1}$ may be considered as 1.

In a possible implementation, transmission of the reference signal may be performed between the first terminal apparatus and the second terminal apparatus, and the first terminal apparatus may determine the sidelink path loss value based on receive power (for example, an RSRP) information and transmit power (for example, an RSRP) information of the reference signal. In another possible implementation, the sidelink path loss value may be configured by the network device, or the downlink path loss value is used as the sidelink path loss value.

The parameters in the formula (4) may be configured by the network device, for example, may be configured by using an RRC message. When the network device does not configure some parameters in the formula (4), the first terminal apparatus may not consider the sixth power value in a process of determining the first power value. Alternatively, the sixth power value may be represented by using a formula: $P_{PRS,SL}?(i) = min(P_{CMAX}, P_{MAX,CBR})[dBm]$. For meanings of parameters in the formula, refer to content of the foregoing formula (2). Details are not described again.

In this embodiment of this application, the sixth power value may alternatively be determined in another manner. For example, the sixth power value is a sum of $P_{O_{PRS},SL}$ and the sidelink path loss value in the formula (4). For another example, the sixth power value is determined based on $P_{O_{PRS},SL}$ and the quantity of resources occupied by the reference signal on the sending occasion i in the formula (4). The foregoing formula (4) is merely a possible example.

In this embodiment of this application, after the first terminal apparatus determines the second power value, the second power value may be large. For example, the second power value is greater than the transmit power of the first terminal apparatus. For another example, the second power value is greater than a transmit power of the first terminal apparatus based on the second CBR and a second transmission priority. In this case, the first terminal apparatus may re-update the second power value and the first power value, and send the reference signal and the PSCCH based on updated power values, to reduce the second power value, so as to avoid an excessively large second power value as much as possible.

In the foregoing step 503, in a possible implementation, when the second power value (for example, the second power value determined in step 502) is greater than a second value, the first terminal apparatus uses the second value as an updated second power value, and sends the PSCCH based on the updated second power value. The first terminal apparatus updates the first power value based on the updated second power value, and sends the reference signal based on an updated first power value.

The second value may be a smaller value in the transmit power of the first terminal apparatus and the transmit power of the first terminal apparatus based on the second CBR and the second transmission priority. Alternatively, the second value may be either value or a larger value in the transmit power of the first terminal apparatus and the transmit power of the first terminal apparatus based on the second CBR and the second transmission priority.

In a possible implementation, the first terminal apparatus determines the updated first power value based on the first parameter and the updated second power value.

The following describes, according to a formula (5), an example of a manner of calculating the updated power value of the reference signal. In the formula (5), $P_{PRS}(i)$ may be considered as the updated first power value, and $P_{PSCCH}(i)$ may be considered as the updated second power value:

$$P_{PRS}(i) = P_{PSCCH}(i) - 10lg(\frac{Comb*M_{RB}^{PSCCH}(i)}{M_{RB}^{PRS}(i)})[dBm] \quad \text{Formula (5)}$$

In the formula (5), $P_{PSCCH}(i)$ represents the transmit power of the PSCCH on the sending occasion i, $P_{PRS}(i)$ represents the transmit power of the reference signal on the sending occasion i, Comb represents the comb value of the reference signal, $M_{RB}^{PSCCH}(i)$ represents the resource quantity (for example, the quantity of RBs of the PSCCH) of the PSCCH on the sending occasion i, and $M_{RB}^{PRS}(i)$ represents the resource quantity (for example, the quantity of RBs of the reference signal) of the reference signal on the sending occasion i.

When a unit in each formula changes, each formula in this embodiment of this application may also change. For example, when a unit in the foregoing formula (5) is not dBm, the foregoing formula (5) may alternatively be replaced with the following formula:

$$P_{PRS}(i) = P_{PSCCH}(i)/(\frac{Comb*M_{RB}^{PSCCH}(i)}{M_{RB}^{PRS}(i)}) \quad \text{or} \quad P_{PRS}(i) = P_{PSCCH}(i) * (\frac{M_{RB}^{PRS}(i)}{Comb*M_{RB}^{PSCCH}(i)}).$$

In the formula, $P_{PSCCH}(i)$ represents the transmit power of the PSCCH on the sending occasion i, and $P_{PRS}(i)$ represents the transmit power of the reference signal on the sending occasion i. A difference between the formula and the formula (5) lies in that units of $P_{PSCCH}(i)$ and $P_{PRS}(i)$ in the formula are not dBm, and may be, for example, watts or milliwatts. For meanings of other parameters in the formula, refer to the descriptions of the formula (5).

The foregoing formula (5) may alternatively be replaced with one of the following formulas. Meanings of related parameters are the same as those in the formula (5). Details are not described again:

$$P_{PRS}(i) = P_{PSCCH}(i) - 10lg(Comb) - 10lg(M_{RB}^{PSCCH}(i)) + 10lg(M_{RB}^{PRS}(i))[dBm];$$

$$P_{PRS}(i) = P_{PSCCH}(i) - 10lg(Comb * M_{RB}^{PSCCH}(i)) + 10lg(M_{RB}^{PRS}(i))[dBm];$$

$$P_{PRS}(i) = P_{PSCCH}(i) - 10lg(Comb) - 10lg(M_{RB}^{PSCCH}(i)/M_{RB}^{PRS}(i))[dBm];$$

$$P_{PRS}(i) = P_{PSCCH}(i) - 10lg(Comb/M_{RB}^{PRS}(i)) - 10lg(M_{RB}^{PSCCH}(i))[dBm];$$

or

$$P_{PRS}(i) = P_{PSCCH}(i) + 10lg(\frac{M_{RB}^{PRS}(i)}{Comb*M_{RB}^{PSCCH}(i)})[dBm].$$

The first power value and the second power value are updated, so that the excessively large second power value can be avoided, and the relationship between the first power value and the second power value can be controlled. In this way, a transmit power of the reference signal on one resource is equal to or close to a transmit power of the PSCCH on one resource, so that the another terminal apparatus can select a more proper resource when performing resource selection based on the RSRP of the PSCCH, and interference to information transmission performed on the selected resource is small.

**Implementation A2:** The first power value is determined based on a third power value.

In the implementation A2, the first terminal apparatus may determine the first power value based on the third power value.

The third power value is determined based on a transmit power of the first terminal apparatus, the resource quantity of the reference signal, the resource quantity of the PSCCH, and the comb value of the reference signal.

The third power value is a difference between or a quotient of the transmit power of the first terminal apparatus and the first value.

In a possible example, the third power value may be obtained according to the following formula (6):

$$\text{third power value} = P_{CMAX} - 10lg\left(\frac{Comb * M_{RB}^{PSCCH}(i)}{M_{RB}^{PRS}(i)}\right) [dBm] \quad \textbf{Formula (6)}$$

In the formula (6), $P_{CMAX}$ represents the transmit power of the first terminal apparatus, Comb represents the comb value of the reference signal, $M_{RB}^{PSCCH}(i)$ represents the resource quantity (for example, the quantity of RBs of the PSCCH) of the PSCCH on the sending occasion i, and $M_{RB}^{PRS}(i)$ represents the resource quantity (for example, the quantity of RBs of the reference signal) of the reference signal on the sending occasion i. For parameters in the formula (6), refer to the related parameters in the foregoing formula (1) and formula (2). Details are not described again.

In addition to the solution for calculating the third power value shown in the foregoing formula (6), there may be some other calculation solutions for the third power value. For example, the third power value may be a sum or a product of the transmit power of the first terminal apparatus and a preset value, to make the third power value less than the transmit power of the first terminal apparatus, so as to reduce the first power value, and further reduce a possibility that the second power value is greater than the transmit power of the first terminal apparatus.

When a unit in each formula changes, each formula in this embodiment of this application may also change. For example, when a unit in the foregoing formula (6) is not dBm, the foregoing formula (6) may alternatively be replaced with the following formula:

$$\text{third power value} = P_{CMAX}/\left(\frac{Comb * M_{RB}^{PSCCH}(i)}{M_{RB}^{PRS}(i)}\right) \quad \text{or} \quad \text{third power}$$

$$\text{value} = P_{CMAX} * \left(\frac{M_{RB}^{PRS}(i)}{Comb * M_{RB}^{PSCCH}(i)}\right)$$ . In the formula, the third power value represents the transmit power of the PSCCH on the sending occasion i, and represents the transmit power of the reference signal on the sending occasion i. A difference between the formula and the formula (6) lies in that units of the third power value and in the formula are not dBm, and may be, for example, watts or milliwatts. For meanings of other parameters in the formula, refer to the descriptions of the formula (6).

In a possible implementation, the formula (6) may alternatively be replaced with one of the following formulas. Meanings of related parameters are the same as those in the formula (6). Details are not described again:

$$\text{third power value} = P_{CMAX} - 10lg(Comb) - 10lg(M_{RB}^{PSCCH}(i)) + 10lg(M_{RB}^{PRS}(i))[dBm];$$

$$\text{third power value} = P_{CMAX} - 10lg(Comb * M_{RB}^{PSCCH}(i)) + 10lg(M_{RB}^{PRS}(i))[dBm];$$

$$\text{third power value} = P_{CMAX} - 10lg(Comb) - 10lg(M_{RB}^{PSCCH}(i)/M_{RB}^{PRS}(i))[dBm];$$

$$\text{third power value} = P_{CMAX} - 10lg(Comb/M_{RB}^{PRS}(i)) - 10lg(M_{RB}^{PSCCH}(i))[dBm];$$

or

$$\text{third power value} = P_{CMAX} + 10lg\left(\frac{M_{RB}^{PRS}(i)}{Comb * M_{RB}^{PSCCH}(i)}\right)[dBm].$$

The first terminal apparatus may further determine the first power value based on another parameter, for example, at least one of the foregoing parameter A1.1, parameter A1.2, parameter A1.3, or parameter A1.4.

In a possible example, the first power value may be obtained according to the following formula (7):

$$P_{PRS}(i) = \min\left(P_{CMAX}, P_{MAX,CBR,1}, P_{CMAX} - 10lg\left(\frac{\text{Comb} * M_{RB}^{PSCCH}(i)}{M_{RB}^{PRS}(i)}\right),\right.$$

$$\left.\min(P_{PRS,D}(i), P_{PRS,SL}(i))\right) [dBm]$$

**Formula (7)**

For parameters in the formula (7), refer to the definitions in the foregoing formula (6) and formula (2). Details are not described again.

The foregoing formula (7) may also have other variations. For example, some other parameters may be added to or reduced from the formula (7), or some weights may be set for some parameters in the formula (7). In a possible implementation, the formula (7) may alternatively be transformed into the following formula:

$$P_{PRS}(i) = \min\left(P_{CMAX}, P_{MAX,CBR,1}, P_{CMAX} - 10lg\left(\frac{\text{Comb} * M_{RB}^{PSCCH}(i)}{M_{RB}^{PRS}(i)}\right),\right.$$

$$\left.P_{PRS,D}(i), P_{PRS,SL}(i)\right) [dBm]$$

For meanings of parameters in the formula, refer to the related descriptions of the formula (7). Details are not described again.

In addition to the foregoing example, the first terminal apparatus may alternatively determine the first power value in another manner. For example, the first terminal apparatus may determine a smallest value in the third power value, the fifth power value, and the sixth power value as the first power value. In this way, the first power value can be reduced as much as possible, thereby reducing power consumption of the terminal device. For another example, the first terminal apparatus may determine a smallest value in the third power value, the fifth power value, the sixth power value, and a specified value as the first power value, where the specified value is a smaller value or a larger value in $P_{CMAX}$ and $P_{MAX,CBR,1}$.

In this embodiment, the first power value is determined based on the third power value. Therefore, the first power value may be as small as possible, so that the second power value calculated based on the first power value can be as small as possible and not greater than the transmit power of the first terminal apparatus. In this way, the first terminal apparatus may determine a more proper second power value.

In the implementation A2, in this embodiment of this application, after the first terminal apparatus determines the second power value, the second power value may be large. For example, the second power value is greater than a transmit power of the first terminal apparatus based on a second CBR and a second transmission priority. The second transmission priority is a transmission priority of the PSCCH, a transmission priority of the reference signal, or a transmission priority of a physical sidelink shared control channel PSSCH. In this case, the first terminal apparatus may re-update the second power value and the first power value, to reduce the second power value, so as to avoid an excessively large second power value as much as possible.

In the foregoing step 503, in a possible implementation, when the second power value is greater than the transmit power of the first terminal apparatus based on the second CBR and the second transmission priority, the first terminal apparatus uses a second value as an updated second power value, and sends the PSCCH based on the updated second power value. The first terminal apparatus updates the first power value based on the updated second power value, and sends the reference signal based on an updated first power value.

In a possible implementation, the first terminal apparatus determines the updated first power value based on the first parameter and the updated second power value. For a manner of updating the first power value, refer to related content in the foregoing formula (5). Details are not described again.

In this way, the excessively large second power value can be avoided, and the relationship between the first power value and the second power value can be controlled. In this way, a transmit power of the reference signal on one resource is equal to or close to a transmit power of the PSCCH on one resource, so that the another terminal apparatus can select a more proper resource when performing resource selection based on the RSRP of the PSCCH, and interference to information transmission performed on the selected resource is small.

**Implementation A3:** The first power value is determined based on a fourth power value.

In the implementation A3, the first terminal apparatus may determine the first power value based on the fourth power value.

The fourth power value is determined based on a transmit power of the first terminal apparatus based on a first CBR and a first transmission priority, the resource quantity of the reference signal, the resource quantity of the PSCCH, and the comb value of the reference signal. For example, the fourth power value is a difference between or a quotient of the transmit power of the first terminal apparatus based on the first CBR and the first transmission priority and the first value.

In a possible example, the fourth power value may be obtained according to the following formula (8):

$$\text{fourth power value} = P_{\text{MAX,CBR,1}} - 10lg\left(\frac{\text{Comb} * M_{RB}^{PSCCH}(i)}{M_{RB}^{PRS}(i)}\right) \text{ Formula (8)}$$

In the formula (8), $P_{\text{MAX,CBR,1}}$ represents the transmit power of the first terminal apparatus based on the first CBR and the first transmission priority, Comb represents the comb value of the reference signal, $M_{RB}^{PSCCH}(i)$ represents the resource quantity (for example, the quantity of RBs of the PSCCH) of the PSCCH on the sending occasion i, and $M_{RB}^{PRS}(i)$ represents the resource quantity (for example, the quantity of RBs of the reference signal) of the reference signal on the sending occasion i. For parameters in the formula (8), refer to the related parameters in the foregoing formula (1) and formula (2). Details are not described again.

In addition to the solution for calculating the fourth power value shown in the foregoing formula (8), there may be some other calculation solutions for the fourth power value. For example, the fourth power value may be a sum or a product of the transmit power of the first terminal apparatus based on the first CBR and the first transmission priority and a preset value, to make the fourth power value less than the transmit power of the first terminal apparatus based on the first CBR and the first transmission priority, so as to reduce the first power value, and further reduce the second power value. In this way, a possibility that the second power value is less than a transmit power of the first terminal apparatus based on a second CBR and a second transmission priority can be increased.

When a unit in each formula changes, each formula in this embodiment of this application may also change. For example, when a unit in the foregoing formula (8) is not dBm, the foregoing formula (8) may alternatively be replaced with the following formula:

$$\text{fourth power value} = P_{MAX,CBR,1}/\left(\frac{Comb * M_{RB}^{PSCCH}(i)}{M_{RB}^{PRS}(i)}\right)$$ , or the foregoing formula (8) may be replaced with:

$$\text{fourth power value} = P_{\text{MAX,CBR,1}} * \left(\frac{M_{RB}^{PRS}(i)}{Comb * M_{RB}^{PSCCH}(i)}\right)$$ . In the two formulas, the fourth power value represents the transmit power of the PSCCH on the sending occasion i, and represents the transmit power of the reference signal on the sending occasion i. A difference between the formulas and the formula (8) lies in that units of the fourth power value and $P_{\text{MAX,CBR,1}}$ in the formulas are not dBm, and may be, for example, watts or milliwatts. For meanings of other parameters in the formulas, refer to the descriptions of the formula (8).

In a possible implementation, the formula (8) may alternatively be replaced with one of the following formulas. Meanings of related parameters are the same as those in the formula (8). Details are not described again:

$$\text{fourth power value} = P_{\text{MAX,CBR,1}} - 10lg(\text{Comb}) - 10lg(M_{RB}^{PSCCH}(i)) + 10lg(M_{RB}^{PRS}(i))[dBm];$$

$$\text{fourth power value} = P_{\text{MAX,CBR,1}} - 10lg(Comb * M_{RB}^{PSCCH}(i)) + 10lg(M_{RB}^{PRS}(i))[dBm];$$

$$\text{fourth power value} = P_{\text{MAX,CBR,1}} - 10lg(Comb) - 10lg(M_{RB}^{PSCCH}(i)/M_{RB}^{PRS}(i))[dBm];$$

$$\text{fourth power value} = P_{MAX,CBR,1} - 10lg(Comb/M_{RB}^{PRS}(i)) - 10lg(M_{RB}^{PSCCH}(i))[dBm];$$

or

$$\text{fourth power value} = P_{MAX,CBR,1} + 10lg\left(\frac{M_{RB}^{PRS}(i)}{Comb * M_{RB}^{PSCCH}(i)}\right)[dBm].$$

The first terminal apparatus may further determine the first power value based on another parameter, for example, at least one of the foregoing parameter A1.1, parameter A1.2, parameter A1.3, or parameter A1.4.

In a possible example, the first power value may be obtained according to the following formula (9):

$$P_{PRS}(i) = \min(P_{CMAX}, P_{MAX,CBR,1}, P_{MAX,CBR,1} - 10lg\left(\frac{Comb * M_{RB}^{PSCCH}(i)}{M_{RB}^{PRS}(i)}\right),$$

$$\min(P_{PRS,D}(i), P_{PRS,SL}(i))) \ [dBm]$$

**Formula (9)**

For parameters in the formula (9), refer to the definitions in the foregoing formula (8) and formula (2). Details are not described again.

The foregoing formula (9) may also have other variations. For example, some other parameters may be added to or reduced from the formula (9), or some weights may be set for some parameters in the formula (9). In a possible implementation, the formula (9) may alternatively be transformed into the following formula:

$$P_{PRS}(i) = \min(P_{CMAX}, P_{MAX,CBR,1}, P_{MAX,CBR,1} - 10lg\left(\frac{Comb * M_{RB}^{PSCCH}(i)}{M_{RB}^{PRS}(i)}\right),$$

$$P_{PRS,D}(i), P_{PRS,SL}(i)) \ [dBm]$$

For meanings of parameters in the formula, refer to the related descriptions of the formula (9). Details are not described again.

In addition to the foregoing example, the first terminal apparatus may alternatively determine the first power value in another manner. For example, the first terminal apparatus may determine a smallest value in the fourth power value, the fifth power value, and the sixth power value as the first power value. In this way, the first power value can be reduced as much as possible, thereby reducing power consumption of the terminal device. For another example, the first terminal apparatus may determine a smallest value in the fourth power value, the fifth power value, the sixth power value, and a specified value as the first power value, where the specified value is a smaller value or a larger value in $P_{CMAX}$ and $P_{MAX,CBR,1}$.

In this embodiment, the first power value is determined based on the fourth power value. Therefore, the first power value may be as small as possible, so that the second power value calculated based on the first power value can be as small as possible and not greater than the transmit power of the first terminal apparatus based on the second CBR and the second transmission priority. In this way, the first terminal apparatus may determine a more proper second power value.

In the implementation A3, in this embodiment of this application, after the first terminal apparatus determines the second power value, the second power value may be large. For example, the second power value is greater than a transmit power of the first terminal apparatus. In this case, the first terminal apparatus may re-update the second power value and the first power value, to avoid a case in which the first power value and the second power value exceed a maximum transmit power of the first terminal apparatus.

In the foregoing step 503, in a possible implementation, when the second power value is greater than the transmit power of the first terminal apparatus, the first terminal apparatus uses a second value as an updated second power value, and sends the PSCCH based on the updated second power value. The first terminal apparatus updates the first power value based on the updated second power value, and sends the reference signal based on an updated first power value.

In a possible implementation, the first terminal apparatus determines the updated first power value based on the first parameter and the updated second power value. For a manner of updating the first power value, refer to related content in the foregoing formula (5). Details are not described again.

In this way, an excessively large second power value can be avoided, and the relationship between the first power value and the second power value can be controlled. In this way, a transmit power of the reference signal on one resource is equal to or close to a transmit power of the PSCCH on one resource, so that the another terminal apparatus can select a more proper resource when performing resource selection based on the RSRP of the PSCCH, and interference to information transmission performed on the selected resource is small.

**Implementation A4:** The first power value is determined based on a third power value and a fourth power value.

For related solutions of the third power value and the fourth power value, refer to the related descriptions of the foregoing implementation A2 and implementation A3. Details are not described again.

The first terminal apparatus may further determine the first power value based on another parameter, for example, at least one of the foregoing parameter A1.1, parameter A1.2, parameter A1.3, or parameter A1.4.

In a possible example, the first power value may be obtained according to the following formula (10):

$$P_{PRS}(i) = \min(P_{CMAX}, P_{MAX,CBR,1}, \mathrm{P_{CMAX}} - 10lg\left(\frac{\mathrm{Comb} * \mathrm{M_{RB}^{PSCCH}}(i)}{\mathrm{M_{RB}^{PRS}}(i)}\right),$$

$$P_{MAX,CBR,1} - 10lg\left(\frac{Comb * \mathrm{M_{RB}^{PSCCH}}(i)}{\mathrm{M_{RB}^{PRS}}(i)}\right), \min(P_{PRS,D}(i), P_{PRS,SL}(i))) \text{ [dBm]}$$

**Formula (10)**

For parameters in the formula (10), refer to the definitions in the foregoing formula (8) and formula (2). Details are not described again.

The foregoing formula (10) may also have other variations. For example, some other parameters may be added to or reduced from the formula (10), or some weights may be set for some parameters in the formula (10). In a possible implementation, the formula (10) may alternatively be transformed into the following formula:

$$P_{PRS}(i) = \min(P_{CMAX}, P_{MAX,CBR,1}, \mathrm{P_{CMAX}} - 10lg\left(\frac{Comb * \mathrm{M_{RB}^{PSCCH}}(i)}{\mathrm{M_{RB}^{PRS}}(i)}\right),$$

$$P_{MAX,CBR,1} - 10lg\left(\frac{Comb * \mathrm{M_{RB}^{PSCCH}}(i)}{\mathrm{M_{RB}^{PRS}}(i)}\right), P_{PRS,D}(i), P_{PRS,SL}(i)) \text{ [dBm]}$$

For meanings of parameters in the formula, refer to the related descriptions of the formula (10). Details are not described again.

In addition to the foregoing example, the first terminal apparatus may alternatively determine the first power value in another manner. For example, the first terminal apparatus may determine a smallest value in the third power value, the fourth power value, the fifth power value, and the sixth power value as the first power value. In this way, the first power value can be reduced as much as possible, thereby reducing power consumption of the terminal device. For another example, the first terminal apparatus may determine a smallest value in the third power value, the fourth power value, the fifth power value, the sixth power value, and a specified value as the first power value, where the specified value is a smaller value or a larger value in $P_{CMAX}$ and $P_{MAX,CBR,1}$.

In the implementation A4, the first power value may be determined based on at least the third power value and the fourth power value. Therefore, the first power value may be as small as possible, so that the second power value calculated based on the first power value can be as small as possible and not greater than a transmit power of the first terminal apparatus based on a second CBR and a second transmission priority, and not greater than a transmit power of the first terminal apparatus. In this way, the first terminal apparatus may determine a more proper second power value.

**Implementation B:** The first terminal apparatus determines the second power value, and determines the first power value based on the first parameter and the second power value.

In this embodiment of this application, there may be an association relationship between the first power value and the second power value. For example, a mathematical operation result (for example, a quotient, a difference, a sum, or a product) between the first power value and the second power value may be associated with the first parameter.

For example, the mathematical operation result (for example, the quotient, the difference, the sum, or the product) between the first power value and the second power value may be associated with a third value.

The third value includes a quotient of a quotient of the resource quantity of the reference signal and the comb value of the reference signal and the resource quantity of the PSCCH. For example, the third value is the quotient of the quotient of the resource quantity of the reference signal and the comb value of the reference signal and the resource quantity of the PSCCH. Alternatively, the third value is a value associated with the quotient (the quotient is the quotient of the quotient of the resource quantity of the reference signal and the comb value of the reference signal and the resource quantity of the PSCCH). For example, the first value is a result obtained by performing some mathematical operations on another parameter and the quotient.

The third value may alternatively include a difference between a difference between the resource quantity of the reference signal and the comb value of the reference signal and the resource quantity of the PSCCH. For example, the third value is the difference between the difference between the resource quantity of the reference signal and the comb value of the reference signal and the resource quantity of the PSCCH. Alternatively, the third value is a value associated with the difference (the difference is the difference between the difference between the resource quantity of the reference signal and the comb value of the reference signal and the resource quantity of the PSCCH). For example, the first value is a result obtained by performing some mathematical operations on another parameter and the difference.

For example, the mathematical operation result (for example, the quotient or the difference) between the first power value and the second power value may be the third value. For another example, the mathematical operation result between the first power value and the second power value may be a mathematical operation result between a preset value and the third value. The preset value may be, for example, a preset adjustment value, and the mathematical operation result between the preset value and the third value may be, for example, a mathematical operation result like a sum of, a product of, a difference between, or a quotient of the preset value and the third value. For another example, an association relationship is established between the mathematical operation result between the first power value and the second power value and the third value according to some formulas. For another example, the mathematical operation result (for example, the sum or the product) between the first power value and the second power value may be an associated value of a reciprocal of the third value.

In the implementation B, in a possible implementation, the first terminal apparatus determines the second power value, and the first terminal apparatus determines the first power value based on the second power value and the third value.

In a possible implementation, the first power value is a sum or a product of the second power value and the third value.

The following describes, according to a formula (11), an example of a manner of calculating the power value of the reference signal:

$$P_{PRS}(i) = P_{PSCCH}(i) + 10lg(\frac{M_{RB}^{PRS}(i)}{Comb*M_{RB}^{PSCCH}(i)})[dBm] \quad \textbf{Formula (11)}$$

In the formula (11), $P_{PRS}(i)$ represents a transmit power of the reference signal on the sending occasion i, $P_{PSCCH}(i)$ represents a transmit power of the PSCCH on the sending occasion i, *Comb* represents the comb value of the reference signal, $M_{RB}^{PSCCH}(i)$ represents the resource quantity (for example, the quantity of RBs of the PSCCH) of the PSCCH on the sending occasion i, and $M_{RB}^{PRS}(i)$ represents the resource quantity (for example, the quantity of RBs of the reference signal) of the reference signal on the sending occasion i.

When a unit in each formula changes, each formula in this embodiment of this application may also change. For example, when a unit in the foregoing formula (11) is not dBm, the foregoing formula (11) may alternatively be replaced with the following formula: $P_{PRS}(i) = P_{PSCCH}(i) * (\frac{M_{RB}^{PRS}(i)}{Comb*M_{RB}^{PSCCH}(i)})$ or $P_{PRS}(i) = P_{PSCCH}(i)/(\frac{Comb*M_{RB}^{PSCCH}(i)}{M_{RB}^{PRS}(i)})$. In the formula, $P_{PSCCH}(i)$ represents the transmit power of the PSCCH on the sending occasion i, and $P_{PRS}(i)$ represents the transmit power of the reference signal on the sending occasion i. A difference between the formula and the formula (11) lies in that units of $P_{PSCCH}(i)$ and $P_{PRS}(i)$ in the formula are not dBm, and may be, for example, watts or milliwatts. For meanings of other parameters in the formula, refer to the descriptions of the formula (11).

In the formula (11), an example in which the resource quantity is the quantity of RBs is used for description. Therefore, subscripts of $M_{RB}^{PSCCH}(i)$ and $M_{RB}^{PRS}(i)$ in the formula (11) each are an RB. If the resource quantity needs to be calculated in another unit in some implementations, the subscript RB in the formula provided in this embodiment of this application may alternatively be replaced.

With reference to the foregoing formula (11), it can be learned that, if the second power value is $P_{PSCCH}(i)$ the first power value may be equivalent to $P_{PRS}(i)$, and the third value may be understood as $\frac{M_{RB}^{PRS}(i)}{Comb * M_{RB}^{PSCCH}(i)}$ in the formula (11), or the third value may be understood as $10lg(\frac{M_{RB}^{PRS}(i)}{Comb * M_{RB}^{PSCCH}(i)})$ in the formula (11).

The third value may alternatively be expressed as any one of the following formulas. For meanings of related parameters, refer to the descriptions of the foregoing formula (11). Details are not described again:

$$- 10lg(Comb) - 10lg(M_{RB}^{PSCCH}(i)) + 10lg(M_{RB}^{PRS}(i));$$

$$- 10lg(Comb * M_{RB}^{PSCCH}(i)) + 10lg(M_{RB}^{PRS}(i));$$

$$- 10lg(Comb) - 10lg(M_{RB}^{PSCCH}(i)/M_{RB}^{PRS}(i));$$

$$- 10lg(Comb/M_{RB}^{PRS}(i)) - 10lg(M_{RB}^{PSCCH}(i));$$

$$\frac{Comb * M_{RB}^{PSCCH}(i)}{M_{RB}^{PRS}(i)};$$

$$10lg(\frac{Comb * M_{RB}^{PSCCH}(i)}{M_{RB}^{PRS}(i)});$$

$$10lg(Comb) + 10lg(M_{RB}^{PSCCH}(i)) - 10lg(M_{RB}^{PRS}(i));$$

$$10lg(Comb * M_{RB}^{PSCCH}(i)) - 10lg(M_{RB}^{PRS}(i));$$

$$10lg(Comb) + 10lg(M_{RB}^{PSCCH}(i)/M_{RB}^{PRS}(i));$$

$$10lg(Comb/M_{RB}^{PRS}(i)) + 10lg(M_{RB}^{PSCCH}(i)).$$

The first terminal apparatus may calculate the first power value according to the foregoing formula (11). Alternatively, there may be another association relationship between the first power value, the second power value, and the third value (for example, the three parameters may alternatively form another mathematical operation formula in combination with another parameter). For example, the foregoing formula (11) may alternatively be replaced with one of the following formulas. Meanings of related parameters are the same as those in the formula (11). Details are not described again:

$$P_{PRS}(i) = P_{PSCCH}(i) - 10lg(Comb) - 10lg(M_{RB}^{PSCCH}(i)) + 10lg(M_{RB}^{PRS}(i))[dBm];$$

$$P_{PRS}(i) = P_{PSCCH}(i) - 10lg(Comb * M_{RB}^{PSCCH}(i)) + 10lg(M_{RB}^{PRS}(i))[dBm];$$

$$P_{PRS}(i) = P_{PSCCH}(i) - 10lg(Comb) - 10lg(M_{RB}^{PSCCH}(i)/M_{RB}^{PRS}(i))[dBm];$$

$$P_{PRS}(i) = P_{PSCCH}(i) - 10lg(Comb/M_{RB}^{PRS}(i)) - 10lg(M_{RB}^{PSCCH}(i))[dBm];$$

or

$$P_{PRS}(i) = P_{PSCCH}(i) - 10lg\left(\frac{Comb*M_{RB}^{PSCCH}(i)}{M_{RB}^{PRS}(i)}\right)[dBm].$$

In the implementation B, the first terminal apparatus determines the second power value in a plurality of manners. The following uses an implementation B1, an implementation B2, an implementation B3, and an implementation B4 as examples for description.

Implementation B1: The second power value is determined based on at least one of the following parameters: a transmit power of the first terminal apparatus; a transmit power of the first terminal apparatus based on a second CBR and a second transmission priority; a ninth power value; or a tenth power value.

In a possible example, the second power value may be obtained according to the following formula (12):

$$P_{PSCCH}(i) = min(P_{CMAX}, P_{MAX,CBR,2}, min(P_{PSCCH,D}(i), P_{PSCCH,SL}(i)))\ [\text{dBm}]$$

**Formula (12)**

In the formula (12), $P_{PSCCH}$? (i) represents the transmit power of the PSCCH on the sending occasion i ($P_{PSCCH}$? (i) may be considered as the second power value), $P_{CMAX}$ represents the transmit power of the first terminal apparatus, $P_{MAX,CBR,2}$ represents the transmit power of the first terminal apparatus based on the second CBR and the second transmission priority, $P_{PSCCH,D}$? (i) represents the ninth power value, and $P_{PSCCH,SL}$? (i) represents the tenth power value.

The foregoing formula (12) may also have some other variations. For example, some other parameters may be added to or reduced from the formula (12), or some weights may be set for some parameters in the formula (12). In a possible implementation, the formula (12) may alternatively be transformed into the following formula:

$$P_{PSCCH}?(i) = min?(P_{CMAX}, P_{MAX,CBR,2}, P_{PSCCH,D}?(i), P_{PSCCH,SL}?(i))\ [\text{dBm}] \quad .$$

For meanings of parameters in the formula, refer to the related descriptions of the formula (12). Details are not described again.

In addition to the foregoing example, the first terminal apparatus may alternatively determine the second power value in another manner. For example, the first terminal apparatus may determine a smaller value in the ninth power value and the tenth power value as the second power value. In this way, the second power value can be reduced as much as possible, thereby reducing power consumption of the terminal device. For another example, the first terminal apparatus may determine a smallest value in the ninth power value, the tenth power value, and a specified value as the second power value, where the specified value is a smaller value or a larger value in $P_{CMAX}$ and $P_{MAX,CBR,2}$. For example, the first terminal apparatus is far away from a network device, but the first terminal apparatus is close to a second terminal apparatus. Therefore, a downlink path loss may be large, the ninth power value may be large, a sidelink path loss may be small, and the tenth power value may be small. If the larger value in $P_{CMAX}$ and $P_{MAX,CBR,2}$ is selected as the specified value, for example, if the specified value is $P_{CMAX}$, the first terminal apparatus may further determine the second power value based on $P_{CMAX}$. For example, the tenth power value may be selected as the second power value. In this way, a communication requirement between terminal devices (between the first terminal apparatus and the second terminal apparatus) can be ensured as much as possible.

The following further describes the parameters in the formula (12) by using a parameter B1.1, a parameter B1.2, a parameter B1.3, and a parameter B1.4.

**Parameter B1.1:** $P_{CMAX}$

In this embodiment of this application, $P_{CMAX}$ may be understood as the transmit power of the first terminal apparatus. For content of the parameter B1.1, refer to related content of the foregoing parameter A1.1. Details are not described again.

**Parameter B1.2:** $P_{MAX,CBR,2}$

$P_{MAX,CBR,2}$ includes the transmit power of the first terminal apparatus based on the second CBR and the second transmission priority.

In this embodiment of this application, the second transmission priority may be a transmission priority of the PSCCH, a transmission priority of the reference signal, or a transmission priority of a physical sidelink shared control channel PSSCH.

The second CBR may be understood as a CBR of a resource pool corresponding to the PSCCH. In this way, the first terminal apparatus may determine the second power value based on the transmit power of the first terminal apparatus based on the second CBR and the second transmission priority, so that the second power value can better match an actual transmit power of the first terminal apparatus. The second CBR in this embodiment of this application may alternatively be a CBR of a resource pool corresponding to the reference signal, or a CBR of a resource pool corresponding to the PSSCH. The second CBR may be the same as or different from the foregoing first CBR.

For example, $P_{MAX,CBR,2}$ may be a maximum transmit power of the first terminal apparatus based on the second CBR and the second transmission priority. $P_{MAX,CBR,2}$ may be indicated by a parameter (the parameter may have a plurality of names, for example, the parameter may be referred to as sl-MaxTxPower-RS) delivered by the network device. $P_{MAX,CBR,2}$ may be carried in an RRC message, or carried in a sidelink resource pool (SL-resource Pool) message. In some cases, the network device may not configure $P_{MAX,CBR,2}$ for the first terminal apparatus, and the first terminal apparatus may not consider $P_{MAX,CBR,2}$ when determining the second power value, or the first terminal apparatus may consider that $P_{MAX,CBR,2}$ and $P_{CMAX}$ are equal.

**Parameter B1.3: Ninth power value**

The ninth power value is associated with at least one of a power control initial value of the PSCCH based on the downlink path loss of the first terminal apparatus, the resource quantity of the reference signal, a downlink path loss adjustment coefficient, or a downlink path loss value.

In a possible implementation, the ninth power value is obtained according to the following formula:

$$P_{PSCCH,D}\ (i) = P_{O_{PSCCH},D} + 10\log_{10}\left(2^{\mu_3} \cdot M_{RB}^{PSCCH}(i)\right) + \alpha_{D2} \cdot PL_{D2}\ [dBm]$$

Formula (13)

In the formula (13), $P_{PSCCH,D}?$ (i) represents the ninth power value, $P_{OPSCCH,D}$ represents the power control initial value of the PSCCH based on the downlink path loss of the first terminal apparatus, $\mu_3$ represents a preset value (which may be a preconfigured value), $M_{RB}^{PSCCH}(i)$ represents the quantity (for example, the quantity of RBs of the PSCCH) of resources occupied by the reference signal on the sending occasion i, $\alpha_{D2}$ represents the downlink path loss adjustment coefficient, and $PL_D$ represents the downlink path loss value.

In the formula (13), $P_{OPSCCH,D}$ may be a preconfigured value, for example, may be configured by using a dl-PO-RS parameter in an RRC message (for example, an SL-ResourcePool message). For another example, in the formula (13), $\alpha_{D2}$ may be a preconfigured value, for example, may be configured by using a dl-Alpha-RS parameter in an RRC message (for example, an SL-ResourcePool message). If $\alpha_{D2}$ is not configured, $\alpha_{D2}$ may be considered as 1.

The first terminal apparatus may estimate the downlink path loss based on a downlink signal. For example, in the formula (13), $PL_{D2} = PL_{b,f,c}(q_d)$, that is, the first terminal apparatus may estimate the downlink path loss value by using a reference signal whose reference signal resource index is $q_d$. Specifically, the downlink path loss value may be obtained by subtracting an RSRP obtained by the first terminal apparatus by measuring the reference signal whose reference signal index is $q_d$ from a transmit power of the reference signal, and the transmit power may be obtained by the first terminal apparatus from the network device.

When the network device does not configure some parameters in the formula (13), the first terminal apparatus may not consider the ninth power value in a process of determining the second power value. Alternatively, the ninth power value may be represented by using a formula: $P_{PSCCH,D}?$ (i) = min($P_{CMAX}$, $P_{MAX,CBR}$)[dBm]. For meanings of parameters in the formula, refer to content of the foregoing formula (12). Details are not described again.

In this embodiment of this application, the ninth power value may alternatively be determined in another manner. For example, the ninth power value is a sum of $P_{OPSCCH,D}$ and the downlink path loss value in the formula (13). For another example, the ninth power value is determined based on $P_{OPSCCH,D}$ and the quantity of resources occupied by the reference signal on the sending occasion i in the formula (13). The foregoing formula (13) is merely a possible example.

**Parameter B1.4: Tenth power value**

The tenth power value is associated with at least one of a power control initial value of the PSCCH based on the sidelink path loss of the first terminal apparatus, the resource quantity of the reference signal, a sidelink path loss adjustment coefficient, or a sidelink path loss value.

In a possible implementation, the tenth power value is obtained according to the following formula:

$$P_{PSCCH,SL}(i) = P_{O_{PSCCH},SL} + 10\log_{10}\left(2^{\mu_4} \cdot M_{RB}^{PSCCH}(i)\right) + \alpha_{SL2} \cdot PL_{SL2}$$

$[dBm]$ **Formula (14)**

In the formula (14), $P_{PSCCH,SL}?(i)$ represents the tenth power value, $P_{O_{PSCCH},SL}$ represents the power control initial value of the PSCCH based on the sidelink path loss of the first terminal apparatus, $\mu_4$ represents a preset value (which may be a preconfigured value), $M_{RB}^{PSCCH}(i)$ represents the quantity (for example, the quantity of RBs of the PSCCH) of resources occupied by the PSCCH on the sending occasion i, $\alpha_{SL2}$ represents the sidelink path loss adjustment coefficient, and $PL_{SL}$ represents the sidelink path loss valuedBm.

In the formula (14), $P_{O_{PSCCH},SL}$ may be a preconfigured value, for example, may be configured by using an sl-P0-RS parameter in an RRC message (for example, an SL-Powercontrol message). For another example, in the formula (14), $\alpha_{SL2}$ may be a preconfigured value, for example, may be configured by using an sl-Alpha-RS parameter in an RRC message (for example, an SL-Powercontrol message). If $\alpha_{SL2}$ is not configured, $\alpha_{SL2}$ may be considered as 1.

In a possible implementation, transmission of the reference signal may be performed between the first terminal apparatus and the second terminal apparatus, and the first terminal apparatus may determine the sidelink path loss value based on receive power (for example, an RSRP) information and transmit power (for example, an RSRP) information of the reference signal. In another possible implementation, the sidelink path loss value may be configured by the network device, or the downlink path loss value is used as the sidelink path loss value.

The parameters in the formula (14) may be configured by the network device, for example, may be configured by using an RRC message. When the network device does not configure some parameters in the formula (14), the first terminal apparatus may not consider the tenth power value in a process of determining the second power value. Alternatively, the tenth power value may be represented by using a formula: $P_{PSCCH,SL}?(i) = min(P_{CMAX}, P_{MAX,CBR})$ [$dBm$]. For meanings of parameters in the formula, refer to content of the foregoing formula (12) and formula (14). Details are not described again.

In this embodiment of this application, the tenth power value may alternatively be determined in another manner. For example, the tenth power value is a sum of $P_{O_{PSCCH},SL}$ and the sidelink path loss value in the formula (14). For another example, the tenth power value is determined based on $P_{O_{PSCCH},SL}$ and the quantity of resources occupied by the reference signal on the sending occasion i in the formula (14). The foregoing formula (14) is merely a possible example.

In this embodiment of this application, after the first terminal apparatus determines the first power value, the first power value may be large. For example, the first power value is greater than the transmit power of the first terminal apparatus. For another example, the first power value is greater than a transmit power of the first terminal apparatus based on the first CBR and a first transmission priority. In this case, the first terminal apparatus may re-update the first power value and the second power value, to avoid a case in which the second power value and the first power value exceed a maximum transmit power of the first terminal apparatus.

In the foregoing step 503, in a possible implementation, when the first power value is greater than a fourth value, the first terminal apparatus uses the fourth value as an updated first power value, and sends the PSCCH based on the updated first power value. The first terminal apparatus updates the second power value based on the updated first power value, and sends the reference signal based on an updated second power value.

The fourth value may be a smaller value in the transmit power of the first terminal apparatus and the transmit power of the first terminal apparatus based on the first CBR and the first transmission priority. Alternatively, the fourth value may be either value or a larger value in the transmit power of the first terminal apparatus and the transmit power of the first terminal apparatus based on the first CBR and the first transmission priority.

In a possible implementation, the first terminal apparatus determines the updated second power value based on the first parameter and the updated first power value.

The following describes, according to a formula (15), an example of a manner of calculating the updated power value of the PSCCH. In the formula (15), $P_{PSCCH}(i)$ may be considered as the updated second power value, and $p_{PRS}(i)$ may be considered as the updated first power value:

$$P_{PSCCH}(i) = P_{PRS}(i) - 10lg\left(\frac{M_{RB}^{PRS}(i)}{Comb * M_{RB}^{PSCCH}(i)}\right)[dBm] \quad \textbf{Formula (15)}$$

In the formula (15), $P_{PSCCH}(i)$ represents the transmit power of the PSCCH on the sending occasion i, $P_{PRS}(i)$ represents the transmit power of the reference signal on the sending occasion i, Comb represents the comb value of the reference signal, $M_{RB}^{PSCCH}(i)$ represents the resource quantity (for example, the quantity of RBs of the PSCCH) of the PSCCH on the sending occasion i, and $M_{RB}^{PRS}(i)$ represents the resource quantity (for example, the quantity of RBs of the reference signal) of the reference signal on the sending occasion i.

When a unit in each formula changes, each formula in this embodiment of this application may also change. For example, when a unit in the foregoing formula (15) is not dBm, the foregoing formula (15) may alternatively be replaced with the following formula: $P_{PSCCH}(i) = P_{PRS}(i)/\left(\dfrac{M_{RB}^{PRS}(i)}{Comb*M_{RB}^{PSCCH}(i)}\right)$ , or the foregoing formula (15) may be replaced with the following formula:

$P_{PSCCH}(i) = P_{PRS}(i)*\left(\dfrac{Comb*M_{RB}^{PSCCH}(i)}{M_{RB}^{PRS}(i)}\right)$ . In the two formulas, $P_{PSCCH}(i)$ represents the transmit power of the PSCCH on the sending occasion i, and $P_{PRS}(i)$ represents the transmit power of the reference signal on the sending occasion i. A difference between the formulas and the formula (15) lies in that units of $P_{PSCCH}(i)$ and $P_{PRS}(i)$ in the formulas are not dBm, and may be, for example, watts or milliwatts. For meanings of other parameters in the formulas, refer to the descriptions of the formula (15).

In a possible implementation, the formula (15) may alternatively be replaced with one of the following formulas. Meanings of related parameters are the same as those in the formula (15). Details are not described again:

$$P_{PSCCH}(i) = P_{PRS}(i) + 10lg(\text{Comb}) + 10lg(M_{RB}^{PSCCH}(i)) - 10lg(M_{RB}^{PRS}(i))[dBm];$$

$$P_{PSCCH}(i) = P_{PRS}(i) + 10lg(Comb * M_{RB}^{PSCCH}(i)) - 10lg(M_{RB}^{PRS}(i))[dBm];$$

$$P_{PSCCH}(i) = P_{PRS}(i) + 10lg(Comb) + 10lg(M_{RB}^{PSCCH}(i)/M_{RB}^{PRS}(i))[dBm];$$

$$P_{PSCCH}(i) = P_{PRS}(i) + 10lg(Comb/M_{RB}^{PRS}(i)) + 10lg(M_{RB}^{PSCCH}(i))[dBm];$$

or

$$P_{PSCCH}(i) = P_{PRS}(i) + 10lg\left(\frac{Comb*M_{RB}^{PSCCH}(i)}{M_{RB}^{PRS}(i)}\right)[dBm].$$

In this way, an excessively large first power value can be avoided, and the relationship between the second power value and the first power value can be controlled. In this way, a transmit power of the reference signal on one resource is equal to or close to a transmit power of the PSCCH on one resource, so that the another terminal apparatus can select a more proper resource when performing resource selection based on the RSRP of the PSCCH, and interference to information transmission performed on the selected resource is small.

**Implementation B2:** The second power value is determined based on a seventh power value.

In the implementation B2, the first terminal apparatus may determine the second power value based on the seventh power value.

The seventh power value is determined based on a transmit power of the first terminal apparatus, the resource quantity of the reference signal, the resource quantity of the PSCCH, and the comb value of the reference signal.

The seventh power value is a difference between or a quotient of the transmit power of the first terminal apparatus and the third value.

In a possible example, the seventh power value may be obtained according to the following formula (16):

$$\text{seventh power value} = P_{CMAX} - 10lg\left(\frac{M_{RB}^{PRS}(i)}{\text{Comb}*M_{RB}^{PSCCH}(i)}\right) \quad \textbf{Formula (16)}$$

In the formula (16), $P_{CMAX}$ represents the transmit power of the first terminal apparatus, Comb represents the comb value of the reference signal, $M_{RB}^{PSCCH}(i)$ represents the resource quantity (for example, the quantity of RBs of the PSCCH) of the PSCCH on the sending occasion i, and $M_{RB}^{PRS}(i)$ represents the resource quantity (for example, the quantity of RBs of the reference signal) of the reference signal on the sending occasion i. For parameters in the formula (16), refer to the related parameters in the foregoing formula (11) and formula (12). Details are not described again.

In addition to the solution for calculating the seventh power value shown in the foregoing formula (16), there may be some other calculation solutions for the seventh power value. For example, the seventh power value may be a sum or a product of the transmit power of the first terminal apparatus and a preset value, to make the seventh power value less than the transmit power of the first terminal apparatus, so as to reduce the second power value, and further reduce a possibility that the first power value is greater than the transmit power of the first terminal apparatus.

When a unit in each formula changes, each formula in this embodiment of this application may also change. For example, when a unit in the foregoing formula (16) is not dBm, the foregoing formula (16) may alternatively be replaced with the following formula:

$$\text{seventh power value} = P_{CMAX}/\left(\frac{M_{RB}^{PRS}(i)}{Comb * M_{RB}^{PSCCH}(i)}\right) \quad \text{or}$$

$$\text{seventh power value} = P_{CMAX} * \left(\frac{Comb * M_{RB}^{PSCCH}(i)}{M_{RB}^{PRS}(i)}\right)$$ . In the formula, the seventh power value represents the transmit power of the PSCCH on the sending occasion i, and represents the transmit power of the reference signal on the sending occasion i. A difference between the formula and the formula (16) lies in that units of the seventh power value and in the formula are not dBm, and may be, for example, watts or milliwatts. For meanings of other parameters in the formula, refer to the descriptions of the formula (16).

In a possible implementation, the formula (16) may alternatively be replaced with one of the following formulas. Meanings of related parameters are the same as those in the formula (16). Details are not described again:

$$\text{seventh power value} = P_{CMAX} + 10lg(Comb) + 10lg(M_{RB}^{PSCCH}(i)) - 10lg(M_{RB}^{PRS}(i))[dBm];$$

$$\text{seventh power value} = P_{CMAX} + 10lg(Comb * M_{RB}^{PSCCH}(i)) - 10lg(M_{RB}^{PRS}(i))[dBm];$$

$$\text{seventh power value} = P_{CMAX} + 10lg(Comb) + 10lg(M_{RB}^{PSCCH}(i)/M_{RB}^{PRS}(i))[dBm];$$

$$\text{seventh power value} = P_{CMAX} + 10lg(Comb/M_{RB}^{PRS}(i)) + 10lg(M_{RB}^{PSCCH}(i))[dBm];$$

or

$$\text{seventh power value} = P_{CMAX} - 10lg\left(\frac{Comb * M_{RB}^{PSCCH}(i)}{M_{RB}^{PRS}(i)}\right)[dBm].$$

The first terminal apparatus may further determine the second power value based on another parameter, for example, at least one of the foregoing parameter B1.1, parameter B1.2, parameter B1.3, or parameter B1.4.

In a possible example, the second power value may be obtained according to the following formula (17):

$$P_{PSCCH}(i) = min(P_{CMAX}, P_{MAX,CBR,2}, P_{CMAX} - 10lg\left(\frac{M_{RB}^{PRS}(i)}{Comb * M_{RB}^{PSCCH}(i)}\right),$$

$$min(P_{PSCCH,D}(i), P_{PSCCH,SL}(i)))\ [dBm]$$

**Formula (17)**

For parameters in the formula (17), refer to the definitions in the foregoing formula (16) and formula (12). Details are not described again.

The foregoing formula (17) may also have other variations. For example, some other parameters may be added to or reduced from the formula (17), or some weights may be set for some parameters in the formula (17). In a possible implementation, the formula (17) may alternatively be transformed into the following formula:

$$P_{PSCCH}(i) = \min\left(P_{CMAX}, P_{MAX,CBR,2}, \ P_{CMAX} - 10\lg\left(\frac{M_{RB}^{PRS}(i)}{Comb * M_{RB}^{PSCCH}(i)}\right),\right.$$

$$\left. P_{PSCCH,D}(i), P_{PSCCH,SL}(i)\right) \ [dBm]$$

For meanings of parameters in the formula, refer to the related descriptions of the formula (17). Details are not described again.

In addition to the foregoing example, the first terminal apparatus may alternatively determine the second power value in another manner. For example, the first terminal apparatus may determine a smallest value in the seventh power value, the ninth power value, and the tenth power value as the second power value. In this way, the second power value can be reduced as much as possible, thereby reducing power consumption of the terminal device. For another example, the first terminal apparatus may determine a smallest value in the seventh power value, the ninth power value, the tenth power value, and a specified value as the second power value, where the specified value is a smaller value or a larger value in $P_{CMAX}$ and $P_{MAX,CBR,2}$.

In this embodiment, the second power value is determined based on the seventh power value. Therefore, the second power value may be as small as possible, so that the first power value calculated based on the second power value can be as small as possible and not greater than the transmit power of the first terminal apparatus. In this way, the first terminal apparatus may determine a more proper first power value.

In the implementation B2, in this embodiment of this application, after the first terminal apparatus determines the first power value, the first power value may be large. For example, the first power value is greater than a transmit power of the first terminal apparatus based on a first CBR and a first transmission priority. In this case, the first terminal apparatus may re-update the first power value and the second power value, to reduce the second power value and the first power value, so as to avoid, as much as possible, a problem that the first power value and the second power value are excessively large.

In the foregoing step 503, in a possible implementation, when the first power value is greater than the transmit power of the first terminal apparatus based on the first CBR and the first transmission priority, the first terminal apparatus uses a fourth value as an updated first power value, and sends the PSCCH based on the updated first power value. The first terminal apparatus updates the second power value based on the updated first power value, and sends the reference signal based on an updated second power value.

In a possible implementation, the first terminal apparatus determines the updated second power value based on the first parameter and the updated first power value. For a manner of updating the second power value, refer to related content in the foregoing formula (15). Details are not described again.

In this way, an excessively large first power value can be avoided, and the relationship between the second power value and the first power value can be controlled. In this way, a transmit power of the reference signal on one resource is equal to or close to a transmit power of the PSCCH on one resource, so that the another terminal apparatus can select a more proper resource when performing resource selection based on the RSRP of the PSCCH, and interference to information transmission performed on the selected resource is small.

Implementation B3: The second power value is determined based on an eighth power value.

In the implementation B3, the first terminal apparatus may determine the second power value based on the eighth power value.

The eighth power value is determined based on a transmit power of the first terminal apparatus based on a second CBR and a second transmission priority, the resource quantity of the reference signal, the resource quantity of the PSCCH, and the comb value of the reference signal.

The eighth power value is a difference between or a quotient of the transmit power of the first terminal apparatus based on the second CBR and the second transmission priority and the third value.

In a possible example, the eighth power value may be obtained according to the following formula (18):

$$\text{eighth power value} = P_{MAX,CBR,2} - 10\lg\left(\frac{M_{RB}^{PRS}(i)}{Comb * M_{RB}^{PSCCH}(i)}\right) \ \textbf{Formula (18)}$$

In the formula (18), $P_{MAX,CBR,2}$ represents the transmit power of the first terminal apparatus based on the second CBR and the second transmission priority, Comb represents the comb value of the reference signal, $M_{RB}^{PSCCH}(i)$ represents the resource quantity (for example, the quantity of RBs of the PSCCH) of the PSCCH on the sending occasion i, and $M_{RB}^{PRS}(i)$ represents the resource quantity (for example, the quantity of RBs of the reference signal) of the reference signal on the sending occasion i. For parameters in the formula (18), refer to the related parameters in the foregoing formula (11) and formula (12). Details are not described again.

In addition to the solution for calculating the eighth power value shown in the foregoing formula (18), there may be some other calculation solutions for the eighth power value. For example, the eighth power value may be a sum or a product of the transmit power of the first terminal apparatus based on the second CBR and the second transmission priority and a preset value, to make the eighth power value less than the transmit power of the first terminal apparatus based on the second CBR and the second transmission priority, so as to reduce the second power value, and further reduce a possibility that the first power value is greater than a transmit power of the first terminal apparatus based on a first CBR and a first transmission priority.

When a unit in each formula changes, each formula in this embodiment of this application may also change. For example, when a unit in the foregoing formula (18) is not dBm, the foregoing formula (18) may alternatively be replaced with the following formula:

$$\text{eighth power value} = P_{MAX,CBR,2} / \left( \frac{M_{RB}^{PRS}(i)}{\text{Comb} * M_{RB}^{PSCCH}(i)} \right)$$ , or the foregoing formula (18) may be replaced with:

$$\text{eighth power value} = P_{MAX,CBR,2} * \left( \frac{Comb * M_{RB}^{PSCCH}(i)}{M_{RB}^{PRS}(i)} \right)$$ . In the two formulas, the eighth power value represents the transmit power of the PSCCH on the sending occasion i, and represents the transmit power of the reference signal on the sending occasion i. A difference between the formulas and the formula (18) lies in that units of the eighth power value and $P_{MAX,CBR,2}$ in the formulas are not dBm, and may be, for example, watts or milliwatts. For meanings of other parameters in the formulas, refer to the descriptions of the formula (18).

In a possible implementation, the formula (18) may alternatively be replaced with one of the following formulas. Meanings of related parameters are the same as those in the formula (18). Details are not described again:

$$\text{eighth power value} = P_{MAX,CBR,2} + 10lg(\text{Comb}) + 10lg(M_{RB}^{PSCCH}(i)) - 10lg(M_{RB}^{PRS}(i))[dBm];$$

$$\text{eighth power value} = P_{MAX,CBR,2} + 10lg(Comb * M_{RB}^{PSCCH}(i)) - 10lg(M_{RB}^{PRS}(i))[dBm];$$

$$\text{eighth power value} = P_{MAX,CBR,2} + 10lg(Comb) + 10lg(M_{RB}^{PSCCH}(i)/M_{RB}^{PRS}(i))[dBm];$$

$$\text{eighth power value} = P_{MAX,CBR,2} + 10lg(Comb/M_{RB}^{PRS}(i)) + 10lg(M_{RB}^{PSCCH}(i))[dBm]; \text{ or}$$

$$\text{eighth power value} = P_{MAX,CBR,2} + 10lg\left(\frac{Comb * M_{RB}^{PSCCH}(i)}{M_{RB}^{PRS}(i)}\right)[dBm].$$

The first terminal apparatus may further determine the second power value based on another parameter, for example, at least one of the foregoing parameter B1.1, parameter B1.2, parameter B1.3, or parameter B1.4.

In a possible example, the second power value may be obtained according to the following formula (19):

$$P_{PSCCH}(i) = min(P_{CMAX}, P_{MAX,CBR,2}, P_{MAX,CBR,2} - 10lg\left(\frac{M_{RB}^{PRS}(i)}{\text{Comb} * M_{RB}^{PSCCH}(i)}\right),$$

$$min(P_{PSCCH,D}(i), P_{PSCCH,SL}(i)))\ [dBm]$$

**Formula (19)**

For parameters in the formula (19), refer to the definitions in the foregoing formula (18) and formula (12). Details are not described again.

The foregoing formula (19) may also have other variations. For example, some other parameters may be added to or reduced from the formula (19), or some weights may be set for some parameters in the formula (19). In a possible implementation, the formula (19) may alternatively be transformed into the following formula:

$$P_{PSCCH}(i) = \min(P_{CMAX}, P_{MAX,CBR,2}, P_{MAX,CBR,2} - 10lg\left(\frac{M_{RB}^{PRS}(i)}{Comb * M_{RB}^{PSCCH}(i)}\right),$$

$$P_{PSCCH,D}(i), P_{PSCCH,SL}(i)) \ [dBm]$$

For meanings of parameters in the formula, refer to the related descriptions of the formula (19). Details are not described again.

In addition to the foregoing example, the first terminal apparatus may alternatively determine the second power value in another manner. For example, the first terminal apparatus may determine a smallest value in the eighth power value, the ninth power value, and the tenth power value as the second power value. In this way, the second power value can be reduced as much as possible, thereby reducing power consumption of the terminal device. For another example, the first terminal apparatus may determine a smallest value in the eighth power value, the ninth power value, the tenth power value, and a specified value as the second power value, where the specified value is a smaller value or a larger value in $P_{CMAX}$ and $P_{MAX,CBR,2}$.

In this embodiment, the second power value is determined based on the eighth power value. Therefore, the second power value may be as small as possible, so that the first power value calculated based on the second power value can be as small as possible and not greater than the transmit power of the first terminal apparatus based on the second CBR and the second transmission priority. In this way, the first terminal apparatus may determine a more proper first power value.

In the implementation B3, in this embodiment of this application, after the first terminal apparatus determines the first power value, the first power value may be large. For example, the first power value is greater than a transmit power of the first terminal apparatus. In this case, the first terminal apparatus may re-update the first power value and the second power value, to avoid a case in which the second power value and the first power value exceed a maximum transmit power of the first terminal apparatus.

In the foregoing step 503, in a possible implementation, when the first power value is greater than the transmit power of the first terminal apparatus, the first terminal apparatus uses a fourth value as an updated first power value, and sends the PSCCH based on the updated first power value. The first terminal apparatus updates the second power value based on the updated first power value, and sends the reference signal based on an updated second power value.

In a possible implementation, the first terminal apparatus determines the updated second power value based on the first parameter and the updated first power value. For a manner of updating the second power value, refer to related content in the foregoing formula (15). Details are not described again.

In this way, an excessively large first power value can be avoided, and the relationship between the second power value and the first power value can be controlled. In this way, a transmit power of the reference signal on one resource is equal to or close to a transmit power of the PSCCH on one resource, so that the another terminal apparatus can select a more proper resource when performing resource selection based on the RSRP of the PSCCH, and interference to information transmission performed on the selected resource is small.

Implementation B4: The second power value is determined based on a seventh power value and an eighth power value.

For related solutions of the seventh power value and the eighth power value, refer to the related descriptions of the foregoing implementation B2 and implementation B3. Details are not described again.

The first terminal apparatus may further determine the second power value based on another parameter, for example, at least one of the foregoing parameter B1.1, parameter B1.2, parameter B1.3, or parameter B1.4.

In a possible example, the second power value may be obtained according to the following formula (20):

$$P_{\text{PSCCH}}(i) = \min\left(P_{CMAX}, P_{MAX,CBR,2}, \ P_{\text{CMAX}} - 10lg\left(\frac{M_{\text{RB}}^{\text{PRS}}(i)}{\text{Comb} * M_{\text{RB}}^{\text{PSCCH}}(i)}\right),\right.$$

$$\left. P_{MAX,CBR,2} - 10lg\left(\frac{M_{\text{RB}}^{\text{PRS}}(i)}{\text{Comb} * M_{\text{RB}}^{\text{PSCCH}}(i)}\right), \min(P_{\text{PSCCH,D}}(i), P_{\text{PSCCH,SL}}(i))\right) \ [\text{dBm}]$$

**Formula (20)**

For parameters in the formula (20), refer to the definitions in the foregoing formula (18) and formula (12). Details are not described again.

The foregoing formula (20) may also have other variations. For example, some other parameters may be added to or reduced from the formula (20), or some weights may be set for some parameters in the formula (20). In a possible implementation, the formula (20) may alternatively be transformed into the following formula:

$$P_{PSCCH}(i) = \min\left(P_{CMAX}, P_{MAX,CBR,2}, \ P_{\text{CMAX}} - 10lg\left(\frac{M_{\text{RB}}^{\text{PRS}}(i)}{\text{Comb} * M_{\text{RB}}^{\text{PSCCH}}(i)}\right),\right.$$

$$\left. P_{MAX,CBR,2} - 10lg\left(\frac{M_{\text{RB}}^{\text{PRS}}(i)}{\text{Comb} * M_{\text{RB}}^{\text{PSCCH}}(i)}\right), P_{\text{PSCCH,D}}(i), P_{\text{PSCCH,SL}}(i)\right) \ [\text{dBm}]$$

For meanings of parameters in the formula, refer to the related descriptions of the formula (20). Details are not described again.

In addition to the foregoing example, the first terminal apparatus may alternatively determine the second power value in another manner. For example, the first terminal apparatus may determine a smallest value in the seventh power value, the eighth power value, the ninth power value, and the tenth power value as the second power value. In this way, the second power value can be reduced as much as possible, thereby reducing power consumption of the terminal device. For another example, the first terminal apparatus may determine a smallest value in the seventh power value, the eighth power value, the ninth power value, the tenth power value, and a specified value as the second power value, where the specified value is a smaller value or a larger value in $P_{\text{CMAX}}$ and $P_{MAX,CBR,2}$.

In the implementation B4, the second power value may be determined based on at least the seventh power value and the eighth power value. Therefore, the second power value may be as small as possible, so that the first power value calculated based on the second power value can be as small as possible and not greater than a transmit power of the first terminal apparatus based on a second CBR and a second transmission priority, and not greater than a transmit power of the first terminal apparatus. In this way, the first terminal apparatus may determine a more proper first power value.

Based on the embodiments shown in FIG. 1, FIG. 2, FIG. 3A, FIG. 3B, FIG. 4A, FIG. 4B, and FIG. 5 and the foregoing other content, FIG. 6 is a possible schematic flowchart of an example of a communication method according to an embodiment of this application. The embodiment shown in FIG. 6 may be used in combination with the embodiment shown in FIG. 5. FIG. 6 may be considered as a possible implementation solution of FIG. 5. The method is presented by using an example in which an execution body is a first terminal apparatus. The first terminal apparatus may be the terminal device in FIG. 1, FIG. 2, FIG. 3A, FIG. 3B, FIG. 4A, or FIG. 4B, or a unit, a module, or a chip (system) in the terminal device.

As shown in FIG. 6, the method includes the following steps.

**Step 601:** The first terminal apparatus obtains a first parameter.

For related content of step 601, refer to related content of the foregoing step 501. Details are not described again.

**Step 602:** The first terminal apparatus determines a first value.

The first value includes a quotient of a product of a resource quantity of a PSCCH and a comb value of a reference signal and a resource quantity of the reference signal. The first value may alternatively be expressed in another formula. For example, the first value may alternatively include a difference between a sum of the resource quantity of the PSCCH and the comb value of the reference signal and the resource quantity of the reference signal. For related content of the first value, refer to the foregoing descriptions. Details are not described again.

**Step 603:** When the first value is greater than 1, the first terminal apparatus determines a second power value, and determines a first power value based on the first parameter and the second power value.

**Step 604:** When the first value is less than 1, the first terminal apparatus determines a first power value, and determines a second power value based on the first parameter and the first power value.

**Step 605:** The first terminal apparatus sends the reference signal based on the first power value, and sends the PSCCH based on the second power value.

For related content of step 605, refer to related content of the foregoing step 503. Details are not described again.

The foregoing step 602, step 603, and step 604 may be considered as a possible implementation of the foregoing step 502. In another possible implementation, when the first value is equal to 1, the first terminal apparatus may first determine the first power value, and then determine the second power value based on the first parameter and the first power value; or may first determine the second power value, and then determine the first power value based on the first parameter and the second power value.

When the first value is greater than 1, the first terminal apparatus first determines the second power value, and then determines the first power value based on the first parameter and the second power value. For example, the first power value may be determined according to the foregoing formula (11). Therefore, the first power value may be as small as possible and not greater than a transmit power of the first terminal apparatus (and/or not greater than a transmit power of the first terminal apparatus based on a first CBR and a first transmission priority), so that a more proper power value can be determined more quickly.

In addition, when the first value is less than 1, the first terminal apparatus first determines the first power value, and then determines the second power value based on the first parameter and the first power value. For example, the second power value may be determined according to the foregoing formula (1). Therefore, the second power value may be as small as possible and not greater than the transmit power of the first terminal apparatus (and/or not greater than a transmit power of the first terminal apparatus based on a second CBR and a second transmission priority), so that a more proper power value can be determined more quickly.

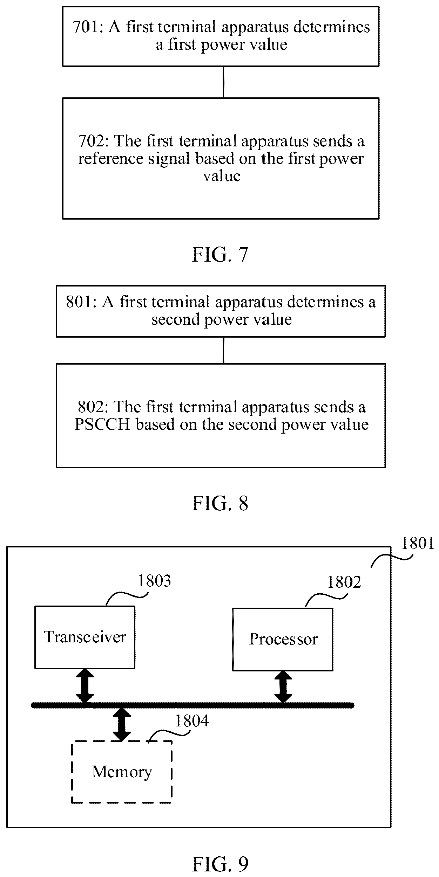

Based on the embodiments shown in FIG. 1, FIG. 2, FIG. 3A, FIG. 3B, FIG. 4A, and FIG. 4B, and the foregoing other content, FIG. 7 is a possible schematic flowchart of examples of several communication methods according to an embodiment of this application. A difference from the embodiments shown in FIG. 5 and FIG. 6 lies in that, in FIG. 5 and FIG. 6, the first terminal apparatus needs to determine the power value of the reference signal with reference to the power value of the PSCCH and the first parameter, while in the embodiment shown in FIG. 7, the first terminal apparatus may independently determine the power value of the reference signal. The embodiment shown in FIG. 7 may be used independently, may be used in combination with subsequent FIG. 8, or may be used in combination with the foregoing embodiments shown in FIG. 5 and FIG. 6. The embodiment shown in FIG. 7 may be considered as a method for determining the power value of the reference signal by the first terminal apparatus according to an embodiment of this application. For example, the embodiment shown in FIG. 7 may also be considered as an implementation of determining the first power value by the first terminal apparatus in the foregoing step 502.

The method shown in FIG. 7 is presented by using an example in which an execution body is the first terminal apparatus. The first terminal apparatus may be the terminal device in FIG. 1, FIG. 2, FIG. 3A, FIG. 3B, FIG. 4A, or FIG. 4B, or a unit, a module, or a chip (system) in the terminal device.

As shown in FIG. 7, the method includes the following steps.

Step **701:** The first terminal apparatus determines the first power value.

The first power value is associated with a comb value of the reference signal.

Step **702:** The first terminal apparatus sends the reference signal based on the first power value.

Because the first power value is associated with the comb value of the reference signal, an average power value of the reference signal on one RE is closer to an average power value of the PSCCH on one RE, so that an RSRP of the PSCCH can better reflect an RSRP of the reference signal. Therefore, when performing resource selection, another terminal apparatus may perform resource selection based on the RSRP of the PSCCH, and the RSRP of the PSCCH measured by the another terminal apparatus may reflect the RSRP of the PSCCH and the RSRP of the reference signal. Therefore, the another terminal apparatus may select a resource more properly.

In step 701, in a possible implementation, the first power value is determined based on at least one of the following parameters: a transmit power of the first terminal apparatus; a transmit power of the first terminal apparatus based on a first CBR and a first transmission priority; an eleventh power value; or a twelfth power value.

In a possible example, the first power value may be obtained according to the following formula (21):

$$P_{PRS}(i) = min(P_{CMAX}, P_{MAX,CBR,1}, min(P_{PRS,D}(i), P_{PRS,SL}(i))) \ [\text{dBm}] \quad \textbf{Formula (21)}$$

In the formula (21), $P_{PRS}$? (i) represents a transmit power of the reference signal on a sending occasion i ($P_{PRS}$? (i) may be considered as the first power value), $P_{CMAX}$ represents the transmit power of the first terminal apparatus, $P_{MAX,CBR,1}$ represents the transmit power of the first terminal apparatus based on the first CBR and the first transmission priority, $P_{PRS,D}$? (i) represents the eleventh power value, and $P_{PRS,SL}$? (i) represents the twelfth power value.

The foregoing formula (21) may also have some other variations. For example, some other parameters may be added to or reduced from the formula (21), or some weights may be set for some parameters in the formula (21). In a possible implementation, the formula (21) may alternatively be transformed into the following formula:

$P_{PRS}(i) = min(P_{CMAX}, P_{MAX,CBR,1}P_{PRS,D}(i), P_{PRS,SL}(i))$ [dBm]. For meanings of parameters in the formula, refer to the related descriptions of the formula (21). Details are not described again.

In addition to the foregoing example, the first terminal apparatus may alternatively determine the first power value in another manner. For example, the first terminal apparatus may determine a smaller value in the eleventh power value and the twelfth power value as the first power value. In this way, the first power value can be reduced as much as possible, thereby reducing power consumption of the terminal device. For another example, the first terminal apparatus may determine a smallest value in the eleventh power value, the twelfth power value, and a specified value as the first power value, where the specified value is a smaller value or a larger value in $P_{CMAX}$ and $P_{MAX,CBR,1}$. For example, the first terminal apparatus is far away from a network device, but the first terminal apparatus is close to a second terminal apparatus. Therefore, a downlink path loss may be large, and the eleventh power value may be large. If the larger value in $P_{CMAX}$ and $P_{MAX,CBR,1}$ is selected as the specified value, for example, if the specified value is $P_{CMAX}$, the first terminal apparatus may further determine the first power value based on $P_{CMAX}$. In this way, a communication requirement between terminal devices can be ensured as much as possible.

The following further describes the parameters in the formula (21) by using a parameter C1.1, a parameter C1.2, a parameter C1.3, and a parameter C1.4.

Parameter C1.1: $P_{CMAX}$

For content of the parameter C1.1, refer to related content of the foregoing parameter A1.1. Details are not described again.

Parameter C1.2: $P_{MAX,CBR,1}$

For content of the parameter C1.2, refer to related content of the foregoing parameter A1.2. Details are not described again.

Parameter C1.3: Eleventh power value

The eleventh power value is associated with the downlink path loss, and the eleventh power value is determined based on the comb value of the reference signal.

For example, the eleventh power value is associated with at least one of the comb value of the reference signal, a power control initial value of the reference signal based on the downlink path loss of the first terminal apparatus, a resource quantity of the reference signal, a downlink path loss adjustment coefficient, or a downlink path loss value.

In a possible implementation, the eleventh power value is obtained according to the following formula:

$$P_{PRS,D}(i) = P_{0,D} + 10\log_{10}\left(2^{\mu_1} \cdot M_{RB}^{PRS}(i)/\text{Comb}\right) + \alpha_{D1} \cdot PL_{D1} \text{ [dBm]} \quad \textbf{Formula (22)}$$

In the formula (22), $P_{PRS,D}$? (i) represents the eleventh power value, $P_{0,D}$ represents the power control initial value of the reference signal based on the downlink path loss of the first terminal apparatus, $\mu_1$ represents a preset value (which may be a preconfigured value), $M_{RB}^{PRS}(i)$ represents a quantity (for example, a quantity of RBs of the reference signal) of resources occupied by the reference signal on the sending occasion i, Comb represents the comb value of the reference signal, $\alpha_{D1}$ represents the downlink path loss adjustment coefficient, and $PL_{D1}$ represents the downlink path loss value. For related content of the formula (22), refer to the related descriptions of the foregoing formula (3). Details are not described again. A difference lies in that $P_{PRS,D}(i)$ determined in the formula (22) is referred to as the eleventh power, and the eleventh power may be calculated by considering the comb value.

**Parameter C1.4: Twelfth power value**

The twelfth power value is associated with a sidelink path loss, and the twelfth power value is determined based on the comb value of the reference signal.

The twelfth power value is associated with at least one of a power control initial value of the reference signal based on the sidelink path loss of the first terminal apparatus, the resource quantity of the reference signal, a sidelink path loss adjustment coefficient, or a sidelink path loss value.

In a possible implementation, the twelfth power value is obtained according to the following formula:

$$P_{PRS,SL}(i) = P_{0,SL} + 10\log_{10}\left(2^{\mu_2} \cdot M_{RB}^{PRS}(i)/\text{Comb}\right) + \alpha_{SL1} \cdot PL_{SL1} \text{ [dBm]} \quad \textbf{Formula (23)}$$

In the formula (23), $P_{PRS,SL}$? (i) represents the twelfth power value, $P_{0,SL}$ represents the power control initial value of the reference signal based on the sidelink path loss of the first terminal apparatus, $\mu_2$ represents a preset value (which may be a preconfigured value), $M_{RB}^{PRS}(i)$ represents the quantity (for example, the quantity of RBs of the reference signal) of resources occupied by the reference signal on the sending occasion i, Comb represents the comb value of the reference signal, $\alpha_{SL1}$ represents the sidelink path loss adjustment coefficient, and $PL_{SL1}$ represents the sidelink path loss value. For related content of the formula (23), refer to the related descriptions of the foregoing formula (4). Details are not described again. A difference lies in that $P_{PRS,SL}(i)$ determined in the formula (23) is referred to as the twelfth power, and the twelfth power may be calculated by considering the comb value.

Based on the embodiments shown in FIG. 1, FIG. 2, FIG. 3A, FIG. 3B, FIG. 4A, and FIG. 4B, and the foregoing other content, FIG. 8 is a possible schematic flowchart of examples of several communication methods according to an embodiment of this application. A difference from the embodiments shown in FIG. 5 and FIG. 6 lies in that, in FIG. 5 and FIG. 6, the first terminal apparatus needs to determine the power value of the PSCCH with reference to the power value of the reference signal and the first parameter, while in the embodiment shown in FIG. 8, the first terminal apparatus may independently determine the power value of the PSCCH. The embodiment shown in FIG. 8 may be used in combination with the embodiment shown in FIG. 7, or may be used in combination with the foregoing embodiments shown in FIG. 5 and FIG. 6. The embodiment shown in FIG. 8 may be considered as a method for determining the power value of the PSCCH by the first terminal apparatus according to an embodiment of this application. For example, the embodiment shown in FIG. 8 may also be considered as an implementation of determining the second power value by the first terminal apparatus in the foregoing step 502.

The method shown in FIG. 7 is presented by using an example in which an execution body is the first terminal apparatus. The first terminal apparatus may be the terminal device in FIG. 1, FIG. 2, FIG. 3A, FIG. 3B, FIG. 4A, or FIG. 4B, or a unit, a module, or a chip (system) in the terminal device.

As shown in FIG. 8, the method includes the following steps.

Step 801: The first terminal apparatus determines the second power value.

The second power value is associated with at least one of a transmit power of the first terminal apparatus, a downlink path loss of the first terminal apparatus, or a sidelink path loss of the first terminal apparatus.

Step 802: The first terminal apparatus sends the PSCCH based on the second power value.

For a solution in which the first terminal apparatus determines the second power value in step 801, refer to content described in the foregoing implementation B1. For example, the first terminal apparatus may determine the second power value according to the foregoing formula (12). Alternatively, step 801 may be determined by using the solution provided in the foregoing implementation B2, implementation B3, or implementation B4. For related content, refer to the foregoing content. Details are not described again.

In this way, the first terminal apparatus may separately determine the power value of the PSCCH. In addition, when the first terminal apparatus does not send a PSSCH, in this solution, the power value of the PSCCH may be determined without depending on a power control solution of the PSSCH, to improve flexibility of the solution.

In embodiments of this application, that a network element (for example, a network element A) receives information from another network element (for example, a network element B) may mean that the network element A directly receives the information from the network element B, or may mean that the network element A receives the information from the network element B via another network element (for example, a network element C). When the network element A receives the information from the network element B via the network element C, the network element C may transparently transmit the information, or may process the information, for example, add the information to different messages for transmission, or screen the information, and send only information obtained through screening to the network element A. Similarly, in various embodiments of this application, that the network element A sends information to the network element B may mean that the network element A directly sends the information to the network element B, or may mean that the network element A sends the information to the network element B via another network element (for example, the network element C).

The terms "system" and "network" may be used interchangeably in embodiments of this application. "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. The expression "at least one of the following items (pieces)" or a similar expression thereof means any combination of these items, including any combination of singular items (pieces) or plural items (pieces). For example, at least one item (piece) of a, b, or c may represent a, b, c, a-b, a-c, b-c, or a-b-c, where a, b, and c may be singular or plural.

In addition, unless otherwise specified, ordinal numbers such as "first" and "second" in embodiments of this application are used to distinguish between a plurality of objects, rather than limit a sequence, timing, priorities, or importance of the plurality of objects.

Names of the foregoing messages are merely examples. With evolution of communication technologies, the name of any message may be changed. However, regardless of how the names of the messages are changed, provided that meanings of the messages are the same as those of the messages in this application, the messages fall within the protection scope of this application.

According to the foregoing method, FIG. 9 is a diagram of a structure of a communication apparatus according to an embodiment of this application. As shown in FIG. 9, the communication apparatus may be a first terminal apparatus. The first terminal apparatus may be the terminal device in FIG. 1, FIG. 2, FIG. 3A, FIG. 3B, FIG. 4A, or FIG. 4B, or a unit, a module, or a chip (system) in the terminal device. The communication apparatus may be configured to perform the method performed by the first terminal apparatus in the related solution in any one of FIG. 5, FIG. 6, FIG. 7, or FIG. 8.

The communication apparatus 1801 includes a processor 1802 and a transceiver 1803.

Further, the communication apparatus 1801 may include a memory 1804. In the figure, the memory 1804 is shown by dashed lines to further indicate that the memory is optional.

Further, the communication apparatus 1801 may further include a bus system. The processor 1802, the memory 1804, and the transceiver 1803 may be connected by using the bus system.

It should be understood that the processor 1802 may be a chip. For example, the processor 1802 may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable controller (programmable logic device, PLD), or another integrated chip.

In an implementation process, steps in the foregoing method may be implemented by using a hardware-integrated logical circuit in the processor 1802 or instructions in a form of software. Steps in the method disclosed with reference to embodiments of this application may be directly completed by a hardware processor, or may be completed by using a combination of hardware in the processor 1802 and a software module. The software module may be located in a mature storage medium in the art, for example, a random access memory, a flash memory, a read-only memory, a programmable read-only memory, an electrically erasable programmable memory, or a register. The storage medium is located in the memory 1804, and the processor 1802 reads information in the memory 1804 and completes the steps in the foregoing method in combination with the hardware of the processor.

It should be noted that, the processor 1802 in this embodiment of this application may be an integrated circuit chip, and has a signal processing capability. In an implementation process, the steps in the foregoing method embodiments may be implemented by using a hardware-integrated logic circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, steps, and logical block diagrams that are disclosed in embodiments of this application may be implemented or performed. The general-purpose processor may be a microprocessor, or the processor may be any conventional processor or the like. The steps in the method disclosed with reference to embodiments of this application may be directly completed by a hardware decoding processor, or may be completed by a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with the hardware of the processor.

It may be understood that the memory 1804 in this embodiment of this application may be a volatile memory or a non-volatile memory, or may include both a volatile memory and a non-volatile memory. For related descriptions of the memory in this embodiment of this application, refer to the foregoing content. Details are not described herein again.

When the communication apparatus 1801 is the foregoing first terminal apparatus, the processor 1802 is configured to: obtain a first parameter through the transceiver 1803, where the first parameter includes a comb value of a reference signal; determine a first power value, and determine a second power value based on the first parameter and the first power value; or determine a second power value, and determine a first power value based on the first parameter and the second power value; and send the reference signal based on the first power value through the transceiver 1803, and send a physical sidelink control channel PSCCH based on the second power value through a communication interface.

In a possible implementation, the processor 1802 is specifically configured to: determine the first power value; and determine the second power value based on the first power value and a first value.

In a possible implementation, the processor 1802 is specifically configured to determine the first power value based on a third power value and/or a fourth power value.

In a possible implementation, the processor 1802 is specifically configured to: determine the second power value; and determine the first power value based on the second power value and a third value.

In a possible implementation, the processor 1802 is specifically configured to determine the second power value based on a seventh power value and/or an eighth power value.

When the communication apparatus 1801 is the foregoing first terminal apparatus, in another possible implementation, the processor 1802 is configured to: determine a first power value, where the first power value is associated with a comb value of a reference signal; and send the reference signal based on the first power value through the transceiver 1803.

When the communication apparatus 1801 is the foregoing first terminal apparatus, in another possible implementation, the processor 1802 is configured to: determine a second power value, where the second power value is associated with at least one of a transmit power of the first terminal apparatus, a downlink path loss of the first terminal apparatus, or a sidelink path loss of the first terminal apparatus; and send a PSCCH based on the second power value through the transceiver 1803.

For concepts, explanations, detailed descriptions, and other steps of the communication apparatus that are related to the technical solutions provided in embodiments of this application, refer to descriptions about the content in the foregoing methods or other embodiments. Details are not described herein.

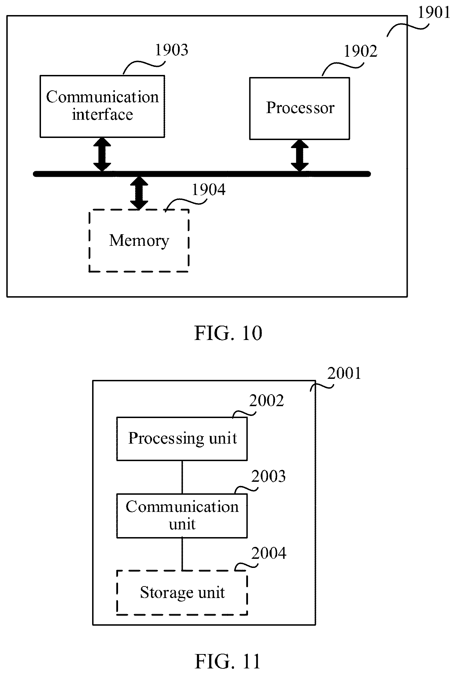

According to the foregoing method, FIG. 10 is a diagram of a structure of a communication apparatus according to an embodiment of this application. As shown in FIG. 10, the communication apparatus 1901 may include a communication interface 1903 and a processor 1902. Further, the communication apparatus 1901 may include a memory 1904. In the figure, the memory 1904 is shown by dashed lines to further indicate that the memory is optional. The communication interface 1903 is configured to input and/or output information. The processor 1902 is configured to execute a computer program or instructions, to enable the communication apparatus 1901 to implement the method on a first terminal apparatus side in the related solution in any one of FIG. 5, FIG. 6, FIG. 7, or FIG. 8. In this embodiment of this application, the communication interface 1903 may implement the solution implemented by the transceiver 1803 in FIG. 9, the processor 1902 may implement the solution implemented by the processor 1802 in FIG. 9, and the memory 1904 may implement the solution implemented by the memory 1804 in FIG. 9. Details are not described herein again.

Based on the foregoing embodiments and a same concept, FIG. 11 is a diagram of a communication apparatus according to an embodiment of this application. As shown in FIG. 11, the communication apparatus 2001 may be a first terminal apparatus. The first terminal apparatus may be the terminal device in FIG. 1, FIG. 2, FIG. 3A, FIG. 3B, FIG. 4A, or FIG. 4B, or a unit, a module, or a chip (system) in the terminal device.

The communication apparatus 2001 includes a processing unit 2002 and a communication unit 2003. Further, the communication apparatus 2001 may or may not include a storage unit 2004. In the figure, the storage unit 2004 is shown by dashed lines to further indicate that the memory is optional.

When the communication apparatus 2001 is the foregoing first terminal apparatus, the processing unit 2002 is configured to: obtain a first parameter, where the first parameter includes a comb value of a reference signal; determine a first power value, and determine a second power value based on the first parameter and the first power value; or determine a second power value, and determine a first power value based on the first parameter and the second power value; and send the reference signal based on the first power value through the communication unit 2003, and send a physical sidelink control channel PSCCH based on the second power value through a communication interface.

When the communication apparatus 2001 is the foregoing first terminal apparatus, in another possible implementation, the processing unit 2002 is configured to: determine a first power value, where the first power value is associated with a comb value of a reference signal; and send the reference signal based on the first power value through the communication unit 2003.

When the communication apparatus 2001 is the foregoing first terminal apparatus, in another possible implementation, the processing unit 2002 is configured to: determine a second power value, where the second power value is associated with at least one of a transmit power of the first terminal apparatus, a downlink path loss of the first terminal apparatus, or a sidelink path loss of the first terminal apparatus; and send a PSCCH based on the second power value through the communication unit 2003.

In this embodiment of this application, the communication unit 2003 is configured to input and/or output information. The processing unit 2002 is configured to execute a computer program or instructions, to enable the communication apparatus 2001 to implement the method on a first terminal apparatus side in the related solution in any one of FIG. 5, FIG. 6, FIG. 7, or FIG. 8. In this embodiment of this application, the communication unit 2003 may implement the solution implemented by the transceiver 1803 in FIG. 9, the processing unit 2002 may implement the solution implemented by the processor 1802 in FIG. 9, and the storage unit 2004 may implement the solution implemented by the memory 1804 in FIG. 9. Details are not described herein again.

According to the method provided in embodiments of this application, this application further provides a computer program product. The computer program product includes computer program code or instructions. When the computer program code or the instructions are run on a computer, the computer is enabled to perform the method in any one of the embodiments shown in FIG. 5, FIG. 6, FIG. 7, or FIG. 8.

According to the method provided in embodiments of this application, this application further provides a computer-readable storage medium. The computer-readable medium stores program code. When the program code is run on a computer, the computer is enabled to perform the method in any one of the embodiments shown in FIG. 5, FIG. 6, FIG. 7, or FIG. 8.

According to the methods provided in embodiments of this application, this application further provides a chip system. The chip system may include a processor. The processor is coupled to a memory, and may be configured to perform the method in any one of the embodiments shown in FIG. 5, FIG. 6, FIG. 7, or FIG. 8. Optionally, the chip system further includes the memory. The memory is configured to store a computer program (which may also be referred to as code or instructions). The processor is configured to invoke the computer program from the memory and run the computer program, to enable a device on which the chip system is installed to perform the method in any one of the embodiments shown in FIG. 5, FIG. 6, FIG. 7, or FIG. 8.

According to the method provided in embodiments of this application, this application further provides a system, including one or more first terminal apparatuses described above. The system may further include a network device. The network device may configure a parameter for the first terminal apparatus, for example, may configure a parameter that needs to be used in a process of calculating a first power value or a second power value. In another possible implementation, the system may further include a terminal apparatus configured to receive a PSCCH and/or a reference signal from the first terminal apparatus.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

It should be noted that a part of this patent application document includes content protected by copyright. Except for making copies of patent documents of the Patent Office or recorded content of patent documents, the copyright owner reserves the copyright.

The first terminal apparatus in the foregoing apparatus embodiments corresponds to the first terminal apparatus in the method embodiments. A corresponding module or unit performs a corresponding step. For example, a communication unit (transceiver) performs a receiving step or a sending step in the method embodiments, and a step other than the sending step and the receiving step may be performed by a processing unit (processor). For a function of a specific unit, refer to a corresponding method embodiment. There may be one or more processors.

Terms such as "component", "module", and "system" used in this specification are for representing a computer-related entity, hardware, firmware, a combination of hardware and software, software, or software being executed. For example, the component may be, but is not limited to, a process that is run on a processor, the processor, an object, an executable file, an execution thread, a program, and/or a computer. As illustrated by using figures, both a computing device and an application that is run on the computing device may be components. One or more components may reside within a process and/or an execution thread, and the component may be located on one computer and/or distributed between two or more computers. In addition, these components may be executed from various computer-readable media that store various data structures. The components may communicate by using a local and/or remote process and based on, for example, a signal having one or more data packets (for example, data from two components interacting with another component in a local system, in a distributed system, and/or across a network such as the Internet interacting with other systems by using the signal).

A person of ordinary skill in the art may be aware that various illustrative logical blocks (illustrative logical blocks) and steps (steps) described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing described system, apparatus, and unit, refer to corresponding processes in the foregoing method embodiments. Details are not described herein again.

In the several embodiments provided in this application, it should be understood that the disclosed system, apparatus, and method may be implemented in another manner. For example, the foregoing described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, in other words, may be located in one place, or may be distributed on a plurality of network units. Some or all of the units may be selected based on actual needs to achieve the objectives of the solutions of embodiments.

In addition, functional units in embodiments of this application may be integrated into one processing unit, or each of the units may exist alone physically, or two or more units may be integrated into one unit. When the functions are implemented in a form of a software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method is applicable to a first terminal apparatus, and the method comprises:

   obtaining a first parameter, wherein the first parameter comprises a comb value of a reference signal;
   determining a first power value, and determining a second power value based on the first parameter and the first power value; or determining a second power value, and determining a first power value based on the first parameter and the second power value; and
   sending the reference signal based on the first power value, and sending a physical sidelink control channel PSCCH based on the second power value.

2. The method according to claim 1, wherein the first parameter further comprises at least one of a resource quantity of the reference signal or a resource quantity of the PSCCH.

3. The method according to claim 1 or 2, wherein determining the first power value, and determining the second power value based on the first parameter and the first power value comprises:

   determining the first power value; and
   determining the second power value based on the first power value and a first value, wherein
   the first value comprises a quotient of a product of the resource quantity of the PSCCH and the comb value of the reference signal and the resource quantity of the reference signal, or the first value comprises a difference between a sum of the resource quantity of the PSCCH and the comb value of the reference signal and the resource quantity of the reference signal.

4. The method according to claim 3, wherein the second power value is a sum or a product of the first power value and the first value.

5. The method according to any one of claims 1 to 4, wherein determining the first power value comprises:

   determining the first power value based on a third power value and/or a fourth power value, wherein
   the third power value is determined based on a transmit power of the first terminal apparatus, the resource quantity of the reference signal, the resource quantity of the PSCCH, and the comb value of the reference signal; and
   the fourth power value is determined based on a transmit power of the first terminal apparatus based on a first network congestion rate CBR and a first transmission priority, the resource quantity of the reference signal, the resource quantity of the PSCCH, and the comb value of the reference signal, and the first transmission priority comprises a transmission priority of the reference signal.

6. The method according to claim 5, wherein the third power value is a difference between or a quotient of the transmit power of the first terminal apparatus and the first value; and the first value comprises the quotient of the product of the resource quantity of the PSCCH and the comb value of the reference signal and the resource quantity of the reference signal, or the first value comprises the difference between the sum of the resource quantity of the PSCCH and the comb value of the reference signal and the resource quantity of the reference signal; and/or
the fourth power value is a difference between or a quotient of the transmit power of the first terminal apparatus based on the first CBR and the first transmission priority and the first value, and the first transmission priority comprises the transmission priority of the reference signal.

7. The method according to claim 1 or 2, wherein determining the second power value, and determining the first power value based on the first parameter and the second power value comprises:

   determining the second power value; and
   determining the first power value based on the second power value and a third value, wherein
   the third value comprises a quotient of a quotient of the resource quantity of the reference signal and the comb value of the reference signal and the resource quantity of the PSCCH, or the third value comprises a difference between a difference between the resource quantity of the reference signal and the comb value of the reference signal and the resource quantity of the PSCCH.

8. The method according to claim 7, wherein the first power value is a sum or a product of the second power value and the third value.

9. The method according to any one of claims 1, 2, 7, and 8, wherein determining the second power value comprises:

   determining the second power value based on a seventh power value and/or an eighth power value, wherein the seventh power value is determined based on a transmit power of the first terminal apparatus, the resource quantity of the reference signal, the resource quantity of the PSCCH, and the comb value of the reference signal; and
   the eighth power value is determined based on a transmit power of the first terminal apparatus based on a second CBR and a second transmission priority, the resource quantity of the reference signal, the resource quantity of the PSCCH, and the comb value of the reference signal, and the second transmission priority is a transmission priority of the PSCCH, a transmission priority of the reference signal, or a transmission priority of a physical sidelink shared control channel PSSCH.

10. The method according to claim 9, wherein the seventh power value is a difference between or a quotient of the transmit power of the first terminal apparatus and the third value; and the third value comprises the quotient of the quotient of the resource quantity of the reference signal and the comb value of the reference signal and the resource quantity of the PSCCH, or the third value comprises the difference between the difference between the resource quantity of the reference signal and the comb value of the reference signal and the resource quantity of the PSCCH; and/or
the eighth power value is a difference between or a quotient of the transmit power of the first terminal apparatus based on the second CBR and the second transmission priority and the third value.

11. A communication apparatus, applicable to a first terminal apparatus, and comprising a communication interface and a processor, wherein the processor is configured to:

   obtain a first parameter, wherein the first parameter comprises a comb value of a reference signal;
   determine a first power value, and determine a second power value based on the first parameter and the first power value; or determine a second power value, and determine a first power value based on the first parameter and the second power value; and
   send the reference signal based on the first power value through the communication interface, and send a physical sidelink control channel PSCCH based on the second power value through the communication interface.

12. The communication apparatus according to claim 11, wherein the first parameter further comprises at least one of a resource quantity of the reference signal or a resource quantity of the PSCCH.

13. The communication apparatus according to claim 11 or 12, wherein the processor is specifically configured to:

   determine the first power value; and

determine the second power value based on the first power value and a first value, wherein the first value comprises a quotient of a product of the resource quantity of the PSCCH and the comb value of the reference signal and the resource quantity of the reference signal, or the first value comprises a difference between a sum of the resource quantity of the PSCCH and the comb value of the reference signal and the resource quantity of the reference signal.

14. The communication apparatus according to claim 13, wherein the second power value is a sum or a product of the first power value and the first value.

15. The communication apparatus according to any one of claims 11 to 14, wherein the processor is specifically configured to:

determine the first power value based on a third power value and/or a fourth power value, wherein the third power value is determined based on a transmit power of the first terminal apparatus, the resource quantity of the reference signal, the resource quantity of the PSCCH, and the comb value of the reference signal; and
the fourth power value is determined based on a transmit power of the first terminal apparatus based on a first network congestion rate CBR and a first transmission priority, the resource quantity of the reference signal, the resource quantity of the PSCCH, and the comb value of the reference signal, and the first transmission priority comprises a transmission priority of the reference signal.

16. The communication apparatus according to claim 15, wherein the third power value is a difference between or a quotient of the transmit power of the first terminal apparatus and the first value; and the first value comprises the quotient of the product of the resource quantity of the PSCCH and the comb value of the reference signal and the resource quantity of the reference signal, or the first value comprises the difference between the sum of the resource quantity of the PSCCH and the comb value of the reference signal and the resource quantity of the reference signal; and/or
the fourth power value is a difference between or a quotient of the transmit power of the first terminal apparatus based on the first CBR and the first transmission priority and the first value, and the first transmission priority comprises the transmission priority of the reference signal.

17. The communication apparatus according to claim 11 or 12, wherein the processor is specifically configured to:

determine the second power value; and
determine the first power value based on the second power value and a third value, wherein the third value comprises a quotient of a quotient of the resource quantity of the reference signal and the comb value of the reference signal and the resource quantity of the PSCCH, or the third value comprises a difference between a difference between the resource quantity of the reference signal and the comb value of the reference signal and the resource quantity of the PSCCH.

18. The communication apparatus according to claim 17, wherein the first power value is a sum or a product of the second power value and the third value.

19. The communication apparatus according to any one of claims 11, 12, 17, and 18, wherein the processor is specifically configured to:

determine the second power value based on a seventh power value and/or an eighth power value, wherein the seventh power value is determined based on a transmit power of the first terminal apparatus, the resource quantity of the reference signal, the resource quantity of the PSCCH, and the comb value of the reference signal; and
the eighth power value is determined based on a transmit power of the first terminal apparatus based on a second CBR and a second transmission priority, the resource quantity of the reference signal, the resource quantity of the PSCCH, and the comb value of the reference signal, and the second transmission priority is a transmission priority of the PSCCH, a transmission priority of the reference signal, or a transmission priority of a physical sidelink shared control channel PSSCH.

20. The communication apparatus according to claim 19, wherein the seventh power value is a difference between or a quotient of the transmit power of the first terminal apparatus and the third value; and the third value comprises the quotient of the quotient of the resource quantity of the reference signal and the comb value of the reference signal and the resource quantity of the PSCCH, or the third value comprises the difference between the difference between the resource quantity of the reference signal and the comb value of the reference signal and the resource quantity of the PSCCH; and/or

the eighth power value is a difference between or a quotient of the transmit power of the first terminal apparatus based on the second CBR and the second transmission priority and the third value.

21. A communication apparatus, comprising a processor and a memory, wherein

the memory is configured to store a computer program or instructions; and
the processor is configured to execute the computer program or the instructions in the memory, to enable the method according to any one of claims 1 to 10 to be performed.

22. A communication apparatus, comprising a processing module and a communication module, wherein the processing module is configured to perform the method according to any one of claims 1 to 10 through the communication module.

23. A computer-readable storage medium, wherein the computer-readable storage medium stores computer-executable instructions, and when the computer-executable instructions are invoked by a computer, the method according to any one of claims 1 to 10 is performed.

24. A chip system, comprising a communication interface and a processor, wherein

the communication interface is configured to: input and/or output signaling or data; and
the processor is configured to execute a computer-executable program, to enable a device on which the chip system is installed to perform the method according to any one of claims 1 to 10.

FIG. 1

FIG. 2

Comb (RE) for sending an SL-PRS when a transmission comb value is 2 and a comb offset value is 0

FIG. 3A

Comb (RE) for sending an SL-PRS
when a transmission comb value is 4
and a comb offset value is 1

FIG. 3B

FIG. 4A

FIG. 4B

501: A first terminal apparatus obtains a first parameter

502: The first terminal apparatus determines a first power value, and determines a second power value based on the first parameter and the first power value; or the first terminal apparatus determines a second power value, and determines a first power value based on the first parameter and the second power value

503: The first terminal apparatus sends a reference signal based on the first power value, and sends a PSCCH based on the second power value

FIG. 5

601: A first terminal apparatus obtains a first parameter

602: The first terminal apparatus determines a first value

603: When the first value is greater than 1, the first terminal apparatus determines a second power value, and determines a first power value based on the first parameter and the second power value

604: When the first value is less than 1, the first terminal apparatus determines a first power value, and determines a second power value based on the first parameter and the first power value

605: The first terminal apparatus sends a reference signal based on the first power value, and sends a PSCCH based on the second power value

FIG. 6

701: A first terminal apparatus determines a first power value

702: The first terminal apparatus sends a reference signal based on the first power value

FIG. 7

801: A first terminal apparatus determines a second power value

802: The first terminal apparatus sends a PSCCH based on the second power value

FIG. 8

1801

1803

Transceiver

1802

Processor

1804

Memory

FIG. 9

1901

1903                                    1902

| Communication interface |          | Processor |

1904

| Memory |

FIG. 10

2001

2002

| Processing unit |

2003

| Communication unit |

2004

| Storage unit |

FIG. 11

## INTERNATIONAL SEARCH REPORT

| | International application No. |
|---|---|
| | **PCT/CN2024/081118** |

**A. CLASSIFICATION OF SUBJECT MATTER**

H04W52/18(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC: 边, 参考信号, 侧, 定位参考信号, 辅, 功率, 控制信道, 旁, 梳, 直, comb, EPRE, power, PRS, PSCCH, RS, size, SL PRS, SL-PRS, sidelink, SL

**C. DOCUMENTS CONSIDERED TO BE RELEVANT**

| Category* | Citation of document, with indication, where appropriate, of the relevant passages | Relevant to claim No. |
|---|---|---|
| A | LG ELECTRONICS. "Discussion on SL positioning reference signal" *3GPP TSG RAN WG1 Meeting #112, R1-2301536,* 03 March 2023 (2023-03-03), section 4 | 1-24 |
| A | CN 114339978 A (SPREADTRUM COMMUNICATIONS (SHANGHAI) CO., LTD.) 12 April 2022 (2022-04-12) entire document | 1-24 |
| A | CN 115643636 A (VIVO COMMUNICATION TECHNOLOGY CO., LTD.) 24 January 2023 (2023-01-24) entire document | 1-24 |
| A | US 2023094751 A1 (QUALCOMM INC.) 30 March 2023 (2023-03-30) entire document | 1-24 |
| A | WO 2022165835 A1 (LENOVO (BEIJING) LTD.) 11 August 2022 (2022-08-11) entire document | 1-24 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 May 2024** | **22 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/081118**

| Patent document cited in search report | | | Publication date (day/month/year) | Patent family member(s) | | | Publication date (day/month/year) |
|---|---|---|---|---|---|---|---|
| CN | 114339978 | A | 12 April 2022 | WO | 2022068610 | A1 | 07 April 2022 |
| | | | | EP | 4224949 | A1 | 09 August 2023 |
| | | | | US | 2023403660 | A1 | 14 December 2023 |
| CN | 115643636 | A | 24 January 2023 | WO | 2023001096 | A1 | 26 January 2023 |
| US | 2023094751 | A1 | 30 March 2023 | WO | 2023048917 | A1 | 30 March 2023 |
| WO | 2022165835 | A1 | 11 August 2022 | US | 2024098757 | A1 | 21 March 2024 |
| | | | | EP | 4289199 | A1 | 13 December 2023 |
| | | | | CN | 116889044 | A | 13 October 2023 |

Form PCT/ISA/210 (patent family annex) (July 2022)

**EP 4 686 272 A1**

**Patent documents cited in the description**

- CN 202310405814